# EUROPEAN PATENT APPLICATION

(11) **EP 4 560 679 A1**
(43) Date of publication of application: **28.05.2025**
(21) Application number: 23856281.3
(22) Date of filing: 29.06.2023
(51) Int. Cl.: H01H 50/16

(54) **LINEAR-MOTION ELECTROMAGNETIC MECHANISM, RELAY, POWER DISTRIBUTION BOX, AND COMMUNICATION DEVICE**

(30) Priority: 26.08.2022 CN 202211034449
(71) Applicant: Huawei Technologies Co., Ltd., Shenzhen, Guangdong 518129 (CN)
(72) Inventor: YAN, Guangchao, Shenzhen, Guangdong 518129 (CN)
(74) Representative: Pfenning, Meinig & Partner mbB
(86) International application number: PCT/CN2023/103853
(87) International publication number: WO 2024/041190

(57) **Abstract**

Embodiments of this application provide a linear motion electromagnetic mechanism (100), a relay (1000), a power distribution box (2000), and a communication device. **In** a linear motion electromagnetic mechanism (100), a first bipolar charging permanent magnet (120) and a second bipolar charging permanent magnet (130) are respectively disposed on two opposite inner walls of a frame-shaped portion (110a) of a magnetic yoke (110), and a first parallel magnetic field (129) and a second parallel magnetic field (139) that are in opposite directions are formed between the first bipolar charging permanent magnet (120) and the second bipolar charging permanent magnet (130). Two semi-ring portions of a powered-on coil (142) are subject to co-directional ampere forces, and the coil (142) drives a movable rack (141) to perform translation motion. The coil (142) is bi-directionally powered on, so that the movable rack (141) moves bi-directionally, to implement switching work of the relay (1000). A first moving iron core (143) and a second moving iron core (144) are configured to form a holding force on the movable rack (141) when the movable rack (141) is at a switch-on position or a switch-off position, to limit a position of the movable rack (141). **In** the linear motion electromagnetic mechanism (100), one magnetic field cavity provides bipolar magnetic fields, and the powered-on coil (142) is subject to the ampere forces in the bipolar magnetic fields to drive the movable rack (141) to translate, so that a small quantity of parts are used, and an overall structural thickness is smaller.

## Description

This application claims priority to Chinese Patent Application No. 202211034449.0, filed with the China National Intellectual Property Administration on August 26, 2022 and entitled "LINEAR MOTION ELECTROMAGNETIC MECHANISM, RELAY, POWER DISTRIBUTION BOX, AND COMMUNICATION DEVICE", which is incorporated herein by reference in its entirety.

### TECHNICAL FIELD

Embodiments of this application relate to the field of relay structure technologies, and in particular, to a linear motion electromagnetic mechanism, a relay, a power distribution box, and a communication device.

### BACKGROUND

For a communication device in a related technology, for example, an internet data center (internet data center, IDC), power supply continuity needs to be satisfied, to support normal operation of the device. Usually, a power supply architecture of a main power supply and a backup power supply is used. When the main power supply is faulty, a relay is used to quickly switch to the backup power supply, to restore normal power supply.

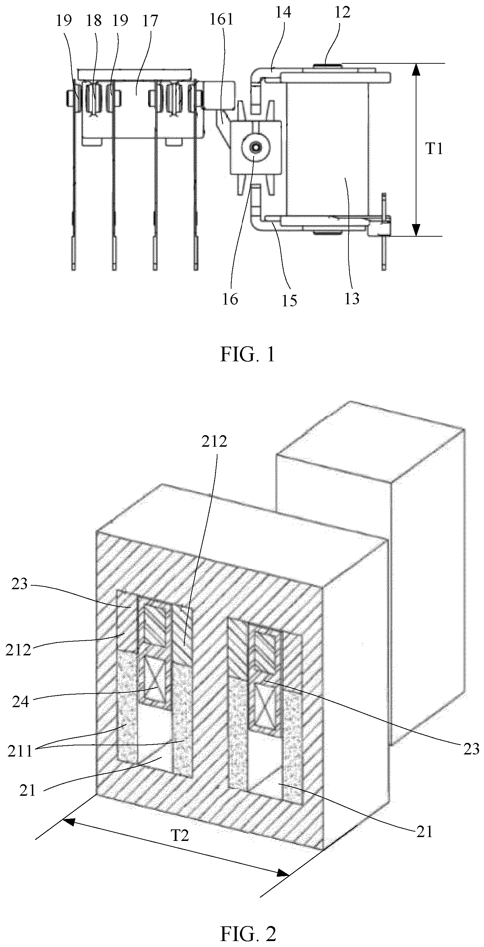

There are different solutions for a conventional relay. A first solution is a clapper-type electromagnetic mechanism shown in FIG. 1, which includes a base, an iron core 12, a coil 13, an upper yoke iron 14, a lower yoke iron 15, an armature 16, and a sliding block 17. The iron core 12 runs through the coil 13. The upper yoke iron 14 and the lower yoke iron 15 are both L-shaped and are respectively disposed at two ends of the coil 13. The armature 16 is located between the upper yoke iron 14 and the lower yoke iron 15 and is rotatably disposed on the base. The sliding block 17 is slidably disposed on the base along a straight line. The armature 16 is connected to a push arm 161, and the push arm 161 cooperates with a slot of the sliding block 17. When the coil 13 is powered on, a magnetic field is generated between the upper yoke iron 14 and the lower yoke iron 15 to drive the armature 16 to swing, and the push arm 161 drives the sliding block 17 to translate, so as to drive a moving contact plate 18 to translate, so that the moving contact plate 18 and a fixed contact plate 19 are in contact or separated. An overall structural thickness T1 of the clapper-type electromagnetic mechanism is large due to a large quantity of parts and arrangement.

A second solution is a multi-magnetic field cavity electromagnetic mechanism shown in FIG. 2, which includes two or four magnetic field cavities 21, a transmission rod, moving iron cores 23, and a coil 24. Each magnetic field cavity 21 includes two spaced-apart main permanent magnets 211 and two spaced-apart auxiliary permanent magnets 212. The two main permanent magnets 211 are magnetized in a same direction, and are configured to provide a magnetic field for the coil 24 to move. The two auxiliary permanent magnets 212 are magnetized in opposite directions, and are configured to provide a holding force. Magnetic field directions of two main permanent magnets 211 in two adjacent magnetic field cavities 21 are opposite, a moving iron core 23 is slidably disposed in each magnetic field cavity 21, and all the moving iron cores 23 are connected to the transmission rod. Two semi-ring portions of the coil 24 are respectively disposed in two adjacent magnetic field cavities 21, and are fastened to moving iron cores 23 corresponding to the two magnetic field cavities 21. When the coil 24 is powered on, the powered-on coil 24 moves under ampere forces, to drive the moving iron cores 23 and the transmission rod to move, and the transmission rod drives a moving contact plate to translate, so that the moving contact plate and a fixed contact plate are in contact or separated. An overall structural thickness T2 of the multi-magnetic field cavity electromagnetic mechanism is large due to a large quantity of magnetic field cavities 21.

The conventional relay has a technical problem that the thickness is large, and it is difficult to further reduce the thickness.

### SUMMARY

Embodiments of this application provide a linear motion electromagnetic mechanism, a relay, a power distribution box, and a communication device, to resolve a technical problem that a thickness of a conventional relay is large.

The following technical solutions are used in embodiments of this application.

According to a first aspect, a linear motion electromagnetic mechanism provided in embodiments of this application includes a magnetic yoke, a first bipolar charging permanent magnet, a second bipolar charging permanent magnet, and a drive assembly. The magnetic yoke has a frame-shaped portion. The first bipolar charging permanent magnet and the second bipolar charging permanent magnet are respectively attached to two opposite inner walls of the frame-shaped portion. The first bipolar charging permanent magnet has a first magnet portion and a second magnet portion that are connected and have opposite magnetic conduction directions. The second bipolar charging permanent magnet has a third magnet portion and a fourth magnet portion that are connected and have opposite magnetic conduction directions. The first magnet portion and the third magnet portion are spaced apart and have a same magnetic conduction direction. The second magnet portion and the fourth magnet portion are spaced apart and have a same magnetic conduction direction. The drive assembly includes a movable rack, a coil, a first moving iron core, and a second moving iron core. The movable rack is capable of moving back and forth in a direction perpendicular to an interface between the first magnet portion and the second magnet portion, to drive a moving contact assembly to move. The coil is disposed on the movable rack. The coil includes a first semi-ring portion and a second semi-ring portion that are connected. The first semi-ring portion is located between the first magnet portion and the third magnet portion. The second semi-ring portion is located between the second magnet portion and the fourth magnet portion. Both the first moving iron core and the second moving iron core are disposed on the movable rack. The first moving iron core is located on a side that is of the first semi-ring portion and that faces away from the second semi-ring portion. The second moving iron core is located on a side that is of the second semi-ring portion and that faces away from the first semi-ring portion.

In the linear motion electromagnetic mechanism provided in embodiments of this application, the first bipolar charging permanent magnet and the second bipolar charging permanent magnet are respectively disposed on the two opposite inner walls of the frame-shaped portion of the magnetic yoke, and a first parallel magnetic field and a second parallel magnetic field that are in opposite directions are formed between the first bipolar charging permanent magnet and the second bipolar charging permanent magnet. The first semi-ring portion and the second semi-ring portion of the coil are respectively disposed in the first parallel magnetic field and the second parallel magnetic field. The two semi-ring portions of the powered-on coil are subject to co-directional ampere forces, and the coil drives the movable rack to perform translation motion. The coil is bi-directionally powered on, so that the movable rack moves bi-directionally, to implement switching work of a relay. The first moving iron core and the second moving iron core are configured to cooperate with the first bipolar charging permanent magnet and the second bipolar charging permanent magnet to form closed magnetic lines when the movable rack is at a switch-on position or a switch-off position, so as to form a holding force on the movable rack and limit a position of the movable rack. The linear motion electromagnetic mechanism in this application is different from a conventional relay in that one magnetic field cavity provides bipolar magnetic fields, and the powered-on coil is subject to the ampere forces in the bipolar magnetic fields to drive the movable rack to translate. The linear motion electromagnetic mechanism uses a small quantity of parts and has a smaller overall structural thickness and a compact structure, and resolves a problem that in a conventional multi-magnetic field cavity electromagnetic mechanism, it is difficult to reduce a size because a single magnetic field cavity provides a single magnetic pole.

In an optional implementation, both the first moving iron core and the second moving iron core are located inside the frame-shaped portion. The first moving iron core is located between the first magnet portion and the third magnet portion, and the second moving iron core is located between the second magnet portion and the fourth magnet portion.

In this solution, the first moving iron core and the second moving iron core are disposed in the frame-shaped portion of the magnetic yoke and are respectively located outside two sides of the coil. When the movable rack is at the switch-on position or the switch-off position, specific magnetic lines are formed between the first bipolar charging permanent magnet, the second bipolar charging permanent magnet, the magnetic yoke, and the first moving iron core (the second moving iron core), to form a holding force on the movable rack and limit the position of the movable rack.

In an optional implementation, the frame-shaped portion includes a first segment, a second segment, a third segment, and a fourth segment that are sequentially connected. The first bipolar charging permanent magnet is attached to an inner wall of the fourth segment. The second bipolar charging permanent magnet is attached to an inner wall of the second segment. The first segment is disposed opposite to the first moving iron core. The third segment is disposed opposite to the second moving iron core. The first segment has a first opening at a position corresponding to the first moving iron core. The third segment has a second opening at a position corresponding to the second moving iron core.

In this solution, the openings are provided at the positions that are of the frame-shaped portion of the magnetic yoke and that correspond to the first moving iron core and the second moving iron core, to serve as magnetic isolation areas, so that more magnetic lines pass through the first moving iron core (or the second moving iron core), a stronger holding force is formed on the first moving iron core and the second moving iron core at the switch-on position or the switch-off position, and cases in which the movable rack is shaken due to interference are reduced.

In an optional implementation, the drive assembly further includes a third moving iron core. The third moving iron core is disposed on the movable rack. The third moving iron core is located inside the coil. Two opposite sides of the third moving iron core respectively face the first bipolar charging permanent magnet and the second bipolar charging permanent magnet.

In this solution, when the movable rack is at the switch-on position or the switch-off position, a closed magnetic circuit that sequentially passes through the first bipolar charging permanent magnet, the third moving iron core, the second bipolar charging permanent magnet, and the magnetic yoke is generated, to associate the first bipolar charging permanent magnet with the second bipolar charging permanent magnet, and increase utilization of the magnetic field.

In an optional implementation, the drive assembly includes the third moving iron core located inside the coil, the second segment has a third opening at a position corresponding to an interface between the third magnet portion and the fourth magnet portion, and the fourth segment has a fourth opening at a position corresponding to the interface between the first magnet portion and the second magnet portion.

In this solution, the opening is provided at the position that is of the frame-shaped portion of the magnetic yoke and that corresponds to the third moving iron core, to serve as a magnetic isolation area, so that a direction of the magnetic lines is changed, a stronger holding force is formed on the third moving iron core at the switch-on position or the switch-off position, and the cases in which the movable rack is shaken due to interference are reduced.

In an optional implementation, the movable rack includes a coil rack, a first vehicle body, and a second vehicle body. The first vehicle body and the second vehicle body are respectively fastened to two opposite ends of the coil rack. The coil is disposed on the coil rack. The first vehicle body is configured to mount the first moving iron core and a part of moving contact assemblies, and the second vehicle body is configured to mount the second moving iron core and a part of moving contact assemblies.

In this solution, the movable rack is configured as an assembly of a plurality of mechanical parts, and is easy to form and assemble. A part of moving contact assemblies are separately disposed on the first vehicle body and the second vehicle body, so that fixed contact assemblies corresponding to different moving contact assemblies are spaced apart at a predetermined distance.

In an optional implementation, the first vehicle body includes a first mounting arm and a first frame portion connected to the first mounting arm. The first mounting arm has a first mounting groove configured to mount a moving contact. The first frame portion is fastened to the coil rack. The first moving iron core is fastened to the first frame portion.

The second vehicle body includes a second mounting arm and a second frame portion connected to the second mounting arm. The second mounting arm has a second mounting groove configured to mount a moving contact. The second frame portion is fastened to the coil rack. The second moving iron core is fastened to the second frame portion.

In this solution, the vehicle body is configured as the mounting arm and the frame portion, the frame portion may be configured to mount the moving iron core, and the frame portion has good structural strength. The vehicle body is reliably connected to the coil rack by using the frame portion, and the moving contact assembly is mounted by using the mounting arm. A structure is simple and is easy to assemble.

In an optional implementation, the magnetic yoke includes a U-shaped yoke iron and a top cover. Two ends of the top cover are respectively fastened to two ends of the U-shaped yoke iron. The first bipolar charging permanent magnet is attached to an inner wall of the top cover. The second bipolar charging permanent magnet is attached to an inner wall of the U-shaped yoke iron.

In this solution, the magnetic yoke is configured to seal the magnetic lines inside a predetermined area, to enhance the magnetic field. The magnetic yoke is configured as an assembly of the U-shaped yoke iron and the top cover, and is easy to form and assemble.

In an optional implementation, the U-shaped yoke iron and the top cover are positioned and assembled by using a first boss and a first notch that are adapted to each other; and/or the first bipolar charging permanent magnet and the top cover are positioned and assembled by using a second boss and a second notch that are adapted to each other; and/or the second bipolar charging permanent magnet and the U-shaped yoke iron are positioned and assembled by using a third boss and a third notch that are adapted to each other.

In this solution, two mechanical parts by using a boss and a notch that are adapted to each other. The boss can extend into the notch, to facilitate quick positioning and assembly of the two mechanical parts.

In some embodiments, a plurality of groups of first bipolar charging permanent magnets and second bipolar charging permanent magnets are disposed. There are a plurality of coils. The plurality of coils are connected in series. The plurality of coils are distributed between the plurality of groups of first bipolar charging permanent magnets and second bipolar charging permanent magnets in a one-to-one correspondence.

In this solution, the plurality of groups of bipolar charging permanent magnets and the coils are configured. In this way, the movable rack has a larger output force, to drive a larger load to move, that is, drive more moving contact assemblies to translate.

In an optional implementation, both the first moving iron core and the second moving iron core are located outside the frame-shaped portion. The first moving iron core is located outside a same end part of the first magnet portion and the third magnet portion. The second moving iron core is located outside a same end part of the second magnet portion and the fourth magnet portion. A first holding permanent magnet is disposed on the first moving iron core. A second holding permanent magnet is disposed on the second moving iron core. Magnetic conduction directions of the first holding permanent magnet and the second holding permanent magnet are opposite.

In this solution, the first moving iron core and the second moving iron core are disposed outside the frame-shaped portion of the magnetic yoke, to facilitate structural assembly. The first moving iron core, the second moving iron core, the first holding permanent magnet, and the second holding permanent magnet provide a holding force for the relay.

In an optional implementation, to provide a greater holding force to reliably position the movable rack, the drive assembly further includes the third moving iron core. The third moving iron core is disposed on the movable rack. The third moving iron core is located inside the coil. The two opposite sides of the third moving iron core respectively face the first bipolar charging permanent magnet and the second bipolar charging permanent magnet.

In this solution, the third moving iron core associates the first bipolar charging permanent magnet with the second bipolar charging permanent magnet, to increase utilization of the magnetic field. After the third moving iron core is configured, a greater holding force can be formed, so that the cases in which the movable rack is shaken due to interference can be more effectively reduced, operation reliability is improved, and the moving contact assembly and the fixed contact assembly on the movable rack are reliably in contact or separated.

According to a second aspect, embodiments of this application provide a relay, including a base, one or more moving contact assemblies, one or more fixed contact assemblies, and the foregoing linear motion electromagnetic mechanism. The one or more fixed contact assemblies are disposed on the base. The one or more moving contact assemblies are disposed on the movable rack. The one or more moving contact assemblies and the one or more fixed contact assemblies are disposed in a one-to-one correspondence.

The relay provided in embodiments of this application is configured with the foregoing linear motion electromagnetic mechanism. One magnetic field cavity provides bipolar magnetic fields, and the powered-on coil is subject to ampere forces in the bipolar magnetic fields to drive the movable rack to translate, so as to drive the moving contact assembly on the movable rack and the fixed contact assembly on the base to perform a switch-on/switch-off action. The linear motion electromagnetic mechanism has a smaller thickness and a compact structure.

In an optional implementation, each moving contact assembly includes a support, two moving spring plates, and a plurality of moving contact points. One moving spring plate is disposed on each of two opposite sides of the support, and one moving contact point is disposed on each of two ends of each moving spring plate.

The moving spring plate is made of an elastic material and has a specific elastic deformation capability. When the moving contact point of the moving spring plate is in contact with the fixed contact assembly, the moving spring plate is elastically deformed, which reduces bounces and improves operation reliability.

In an optional implementation, each moving contact assembly further includes two elastic sheets. One elastic sheet is disposed on each of the two opposite sides of the support. The two moving spring plates are disposed in a one-to-one correspondence on sides that are of the two elastic sheets and that face away from the support.

The elastic sheet is disposed between each moving spring plate and the support, so that the two moving spring plates are spaced apart at a specific distance, the elastic deformation capability of the moving spring plate is also improved, and bounces of the moving spring plate are further reduced.

In an optional implementation, each fixed contact assembly includes four fixed contact plates, four fixed contact points, and two arc-extinguishing permanent magnets. The fixed contact plates are spaced apart in pairs. Each pair of the fixed contact plates and one moving spring plate are disposed correspondingly. Two moving spring plates in a same moving contact assembly are located between two pairs of fixed contact plates. The fixed contact point is disposed on each fixed contact plate. The fixed contact point and the moving contact point cooperate in a one-to-one correspondence. In an arrangement direction of the two moving spring plates, one arc-extinguishing permanent magnet is disposed between every two adjacent fixed contact plates.

The fixed contact assembly and the moving contact assembly are disposed correspondingly, and each moving spring plate of the moving contact assembly corresponds to two fixed contact plates of the fixed contact assembly. When two moving contact points on the moving spring plate and fixed contact points on the two fixed contact plates are in contact in a one-to-one correspondence, a circuit is connected. When the two moving contact points and the corresponding fixed contact points are separated, the circuit is disconnected. The arc-extinguishing permanent magnet is configured to quickly extinguish an arc when the fixed contact assembly and the moving contact assembly are separated.

According to a third aspect, an embodiment of this application provides a power distribution box, including a circuit board and the foregoing relay. The relay is electrically connected to the circuit board. The power distribution box may be connected to two power supplies and a power consuming device. A plurality of moving contact assemblies and fixed contact assemblies on the relay are in contact or separated, so that switching between the two power supplies can be implemented, to supply power to the power consuming device.

According to a fourth aspect, an embodiment of this application provides a communication device, including a power consuming device and the foregoing power distribution box. The power consuming device is electrically connected to the power distribution box. A scenario in which a backup power supply is quickly switched when a main power supply experiences a power failure is implemented, to reduce power failure time of a system, reduce data losses, and avoid a service loss.

### BRIEF DESCRIPTION OF DRAWINGS

FIG. 1 is a diagram of a structure of a conventional clapper-type electromagnetic mechanism;
FIG. 2 is a diagram of a structure of a conventional multi-magnetic field cavity electromagnetic mechanism;
FIG. 3 is a three-dimensional diagram of assembly of a linear motion electromagnetic mechanism according to an embodiment of this application;
FIG. 4 is a three-dimensional exploded view of a relay according to an embodiment of this application;
FIG. 5 is a top view of the relay, in FIG. 4, obtained after a cover body is removed;
FIG. 6 is a diagram of assembly of a magnetic yoke, a first bipolar charging permanent magnet, and a second bipolar charging permanent magnet in the linear motion electromagnetic mechanism in FIG. 3;
FIG. 7 is a diagram of a structure in which a coil in the linear motion electromagnetic mechanism in FIG. 3 is disposed between a first bipolar charging permanent magnet and a second bipolar charging permanent magnet;
FIG. 8 is a three-dimensional diagram of assembly of a drive assembly in the linear motion electromagnetic mechanism in FIG. 3;
FIG. 9 is a three-dimensional diagram of assembly of partial structures of a coil and a movable rack in the drive assembly in FIG. 8;
FIG. 10 is an enlarged main view of the linear motion electromagnetic mechanism in FIG. 3;
FIG. 11 is a three-dimensional sectional view of the linear motion electromagnetic mechanism, in FIG. 3 along a line A-A, obtained after a moving contact assembly is removed;
FIG. 12 is an enlarged sectional view of FIG. 3 along a line A-A;
(a) and (b) in FIG. 13 are respectively a magnetic field simulation diagram of a drive assembly existing when a third moving iron core is not configured and a magnetic field simulation diagram of the drive assembly existing when the third moving iron core is configured;
(a) and (b) in FIG. 14 are respectively a magnetic field simulation diagram of a drive assembly existing when a magnetic yoke is not provided with an opening and a magnetic field simulation diagram of the drive assembly existing when the magnetic yoke is provided with the opening;

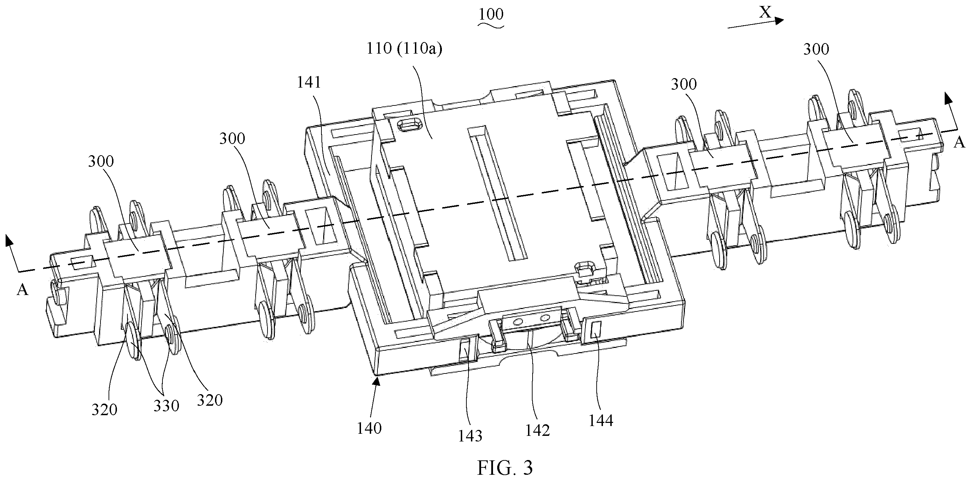

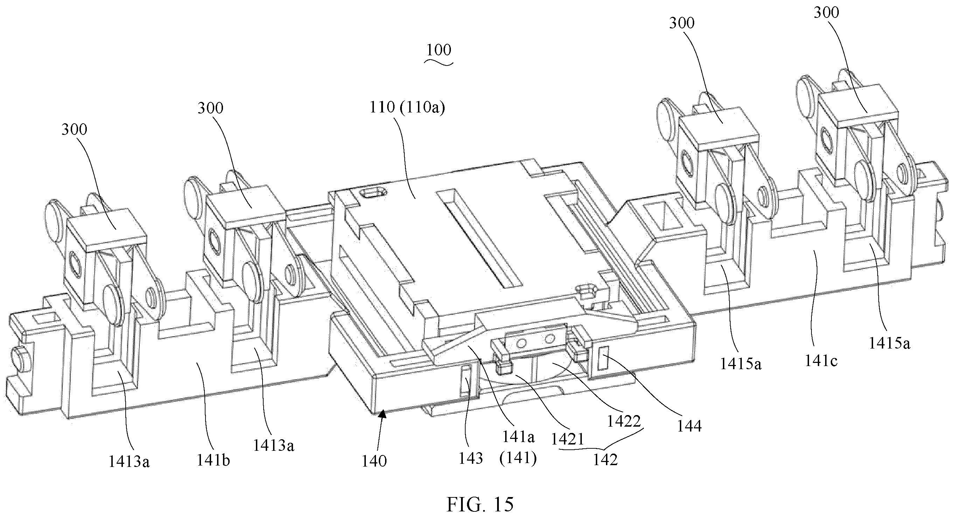

FIG. 15 is a three-dimensional exploded view of the linear motion electromagnetic mechanism and a moving contact assembly in FIG. 3;

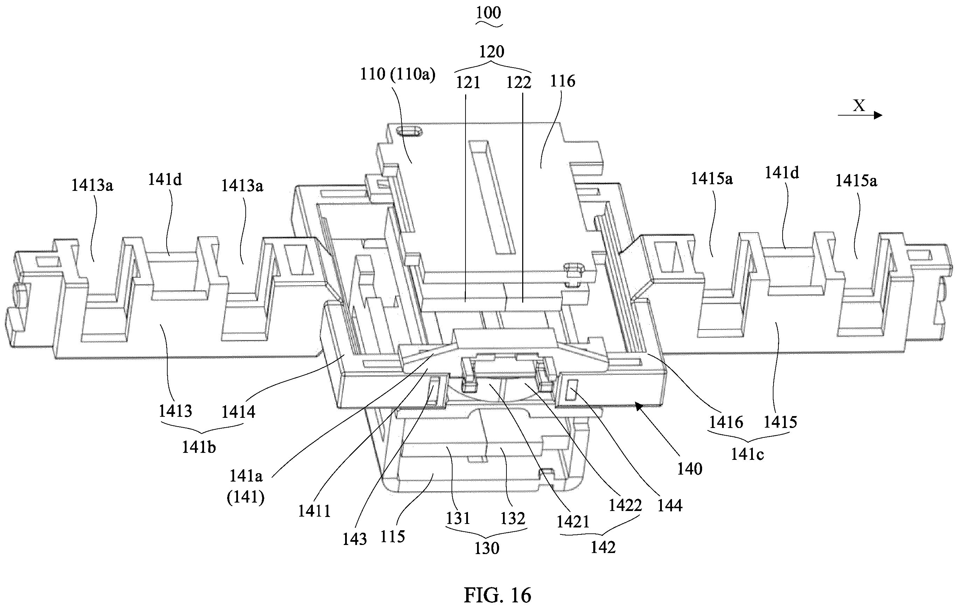

FIG. 16 is a three-dimensional exploded view of the linear motion electromagnetic mechanism in FIG. 15;

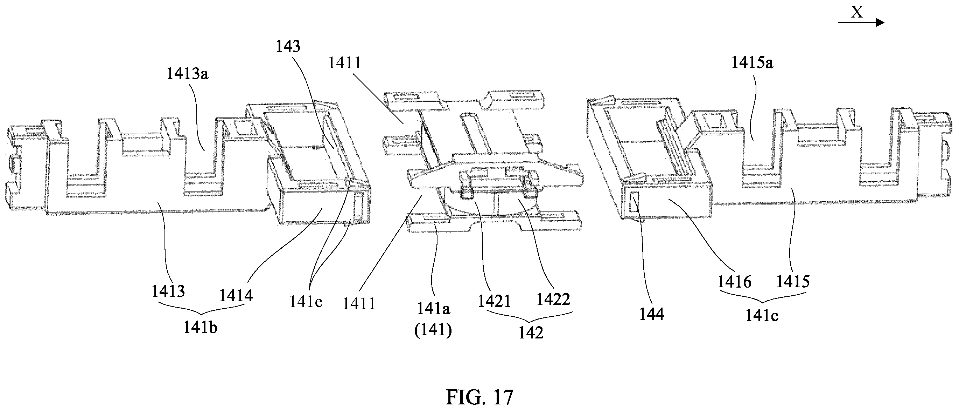

FIG. 17 is an enlarged top view of the linear motion electromagnetic mechanism in FIG. 15;

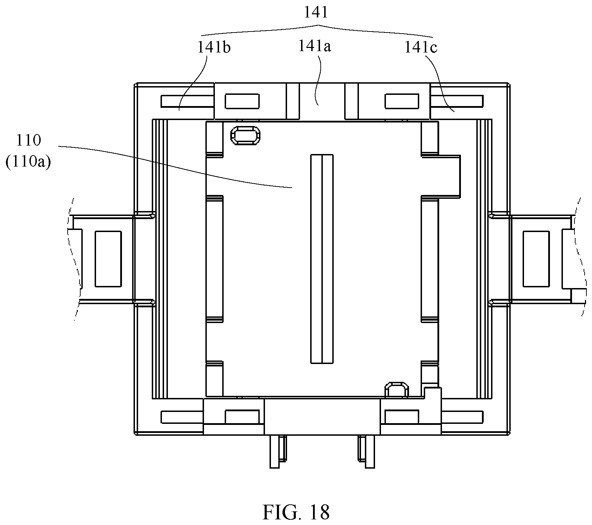

FIG. 18 is a three-dimensional exploded view of a movable rack in the linear motion electromagnetic mechanism in FIG. 15;

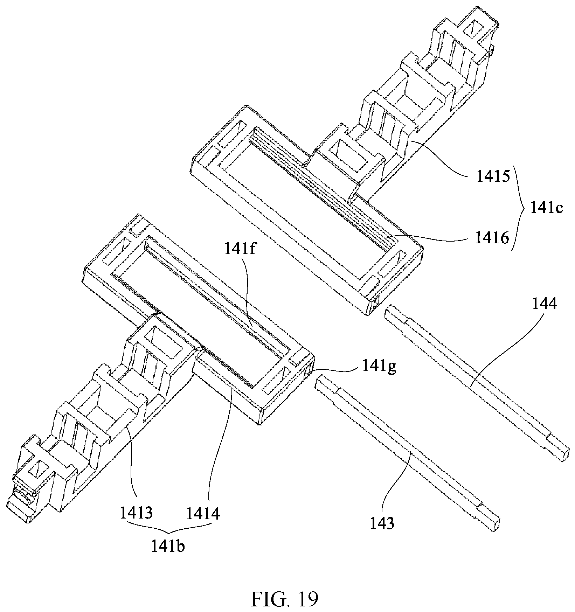

FIG. 19 is a three-dimensional exploded view of the movable rack, a first moving iron core, and a second moving iron core in FIG. 18;

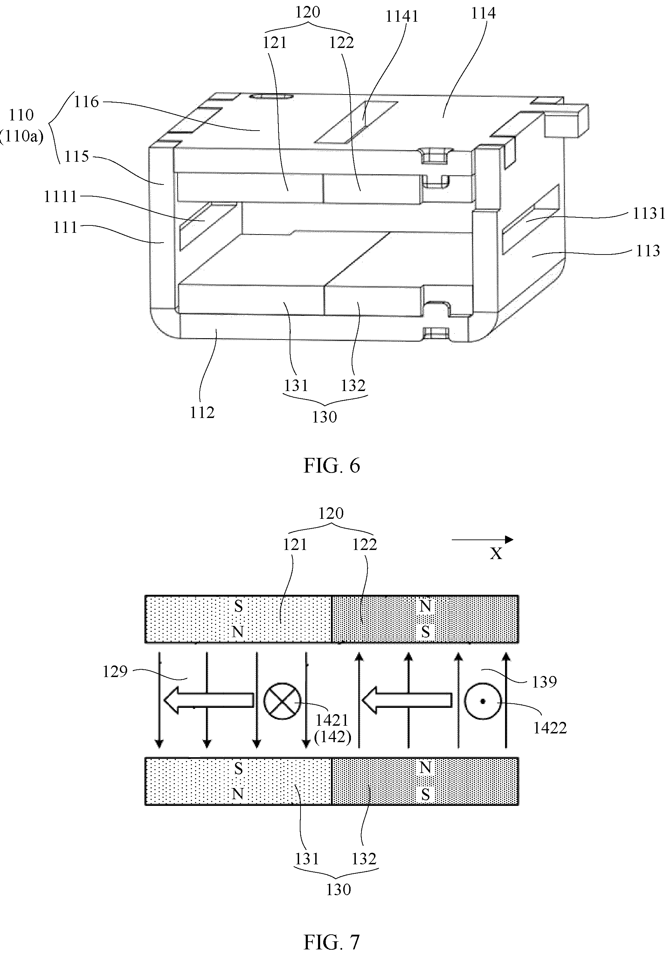

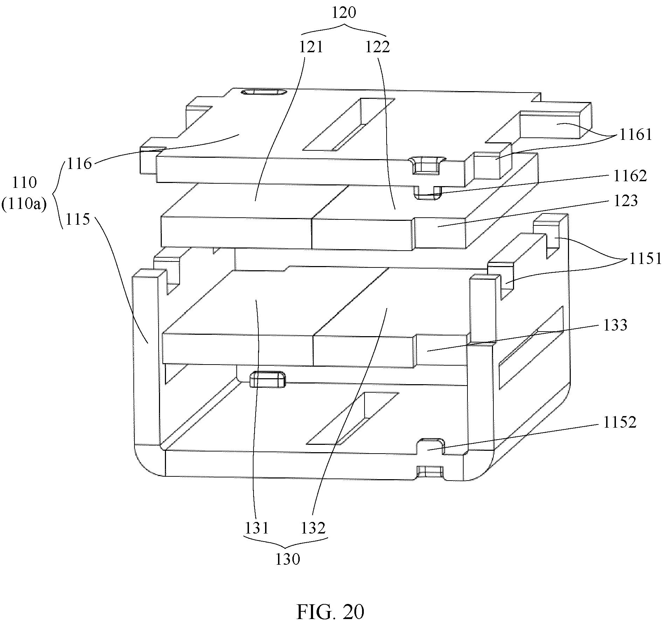

FIG. 20 is a three-dimensional exploded view of the magnetic yoke, the first bipolar charging permanent magnet, and the second bipolar charging permanent magnet in the linear motion electromagnetic mechanism in FIG. 6;

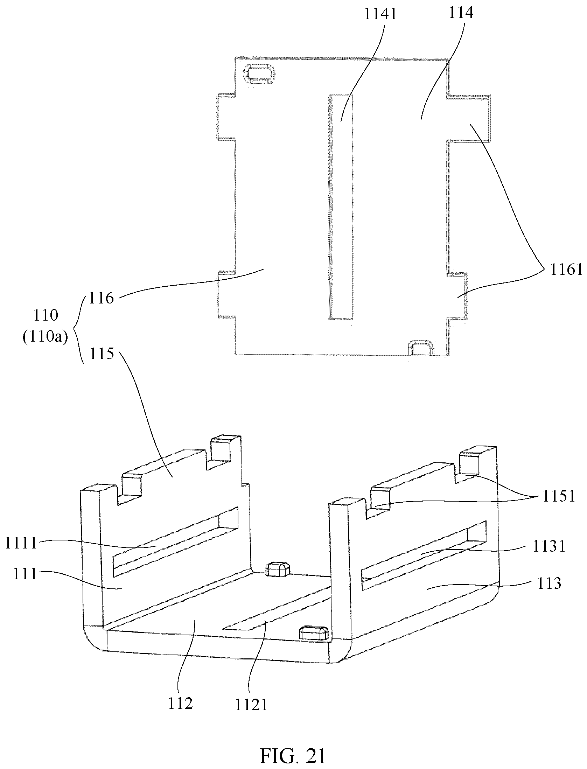

FIG. 21 is a three-dimensional exploded view of the magnetic yoke in the linear motion electromagnetic mechanism in FIG. 6;

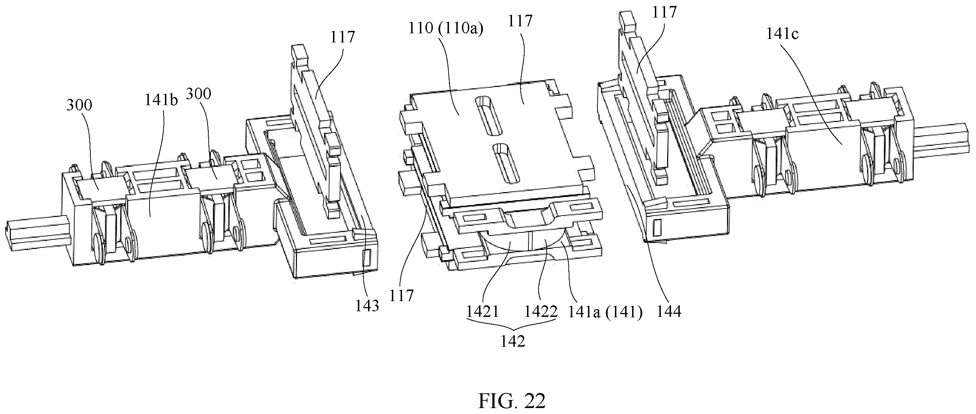

FIG. 22 is a three-dimensional exploded view of a linear motion electromagnetic mechanism according to another embodiment of this application;

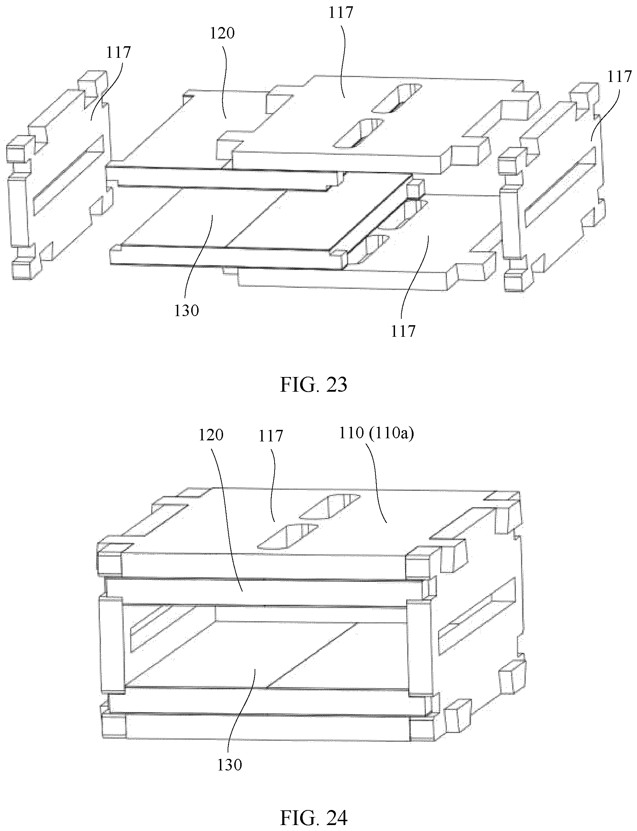

FIG. 23 is a three-dimensional exploded view of a magnetic yoke, a first bipolar charging permanent magnet, and a second bipolar charging permanent magnet in the linear motion electromagnetic mechanism in FIG. 22;
FIG. 24 is a three-dimensional diagram of assembly of the magnetic yoke, the first bipolar charging permanent magnet, and the second bipolar charging permanent magnet in FIG. 23;

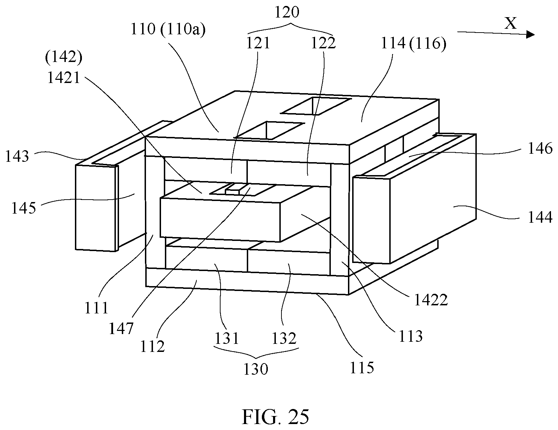

FIG. 25 is a diagram of a partial structure of a linear motion electromagnetic mechanism according to another embodiment of this application;

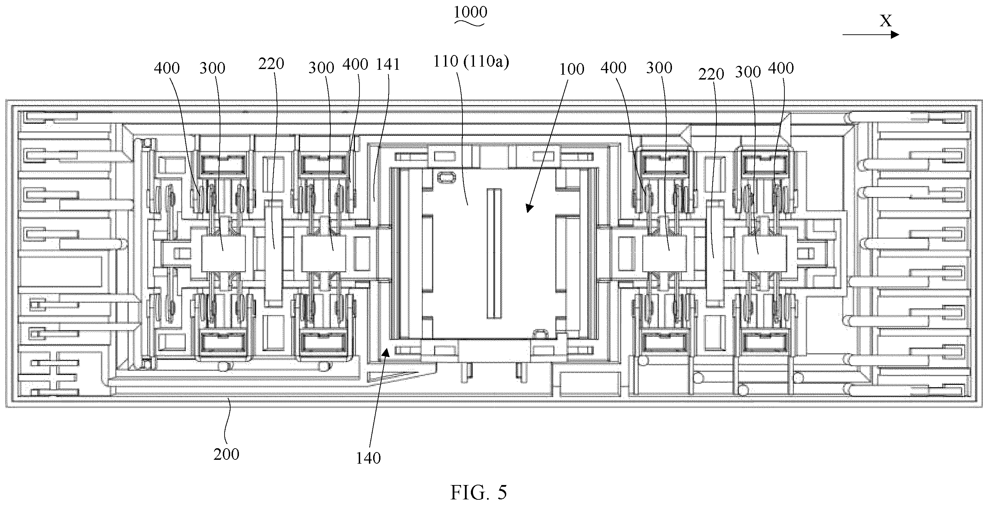

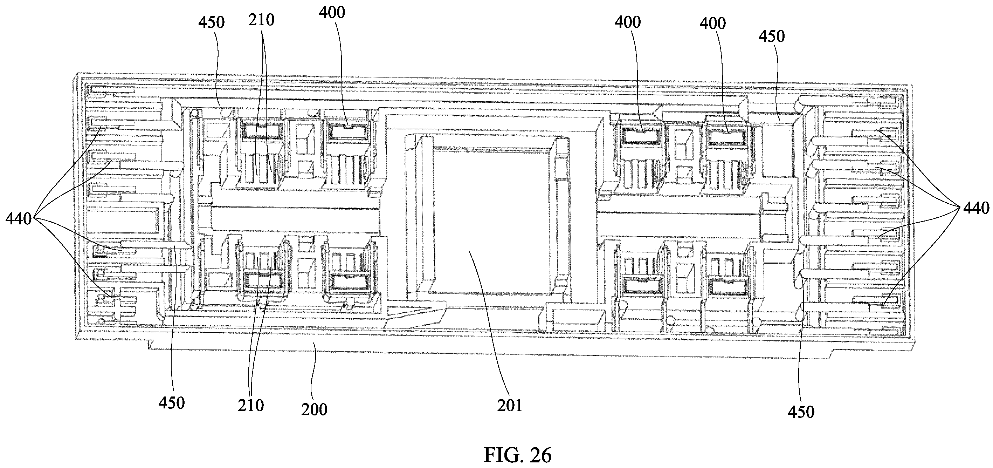

FIG. 26 is a diagram of a structure of the relay, in FIG. 5, obtained after a linear motion electromagnetic mechanism is removed;

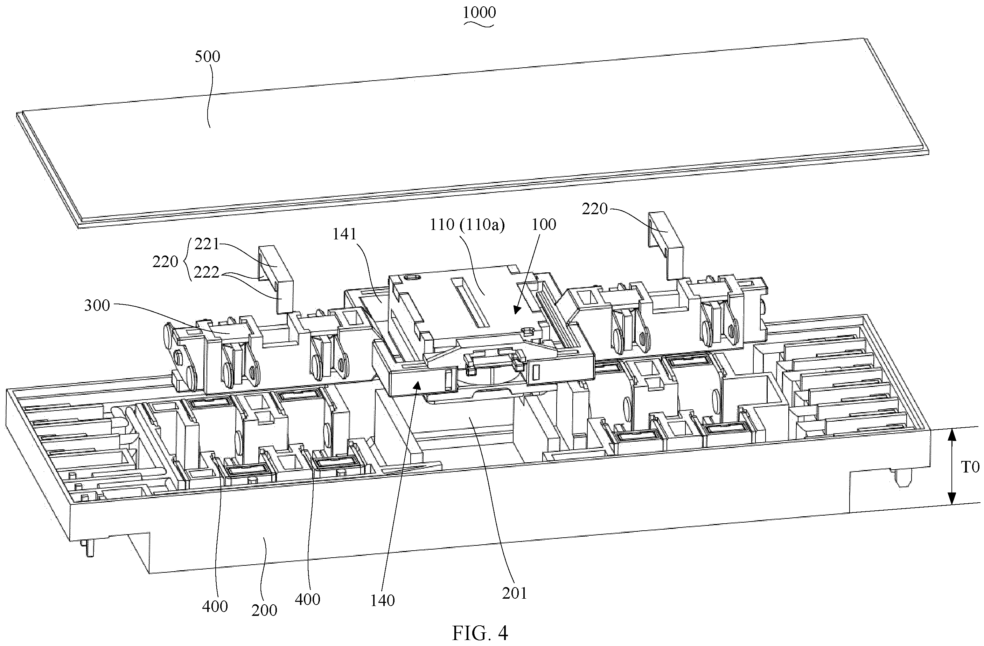

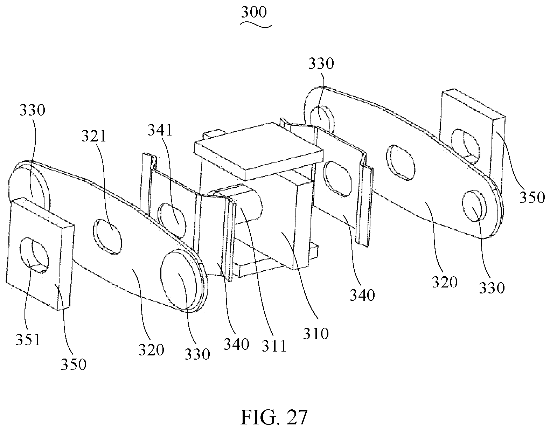

FIG. 27 is a three-dimensional exploded view of a moving contact assembly in the relay in FIG. 4;

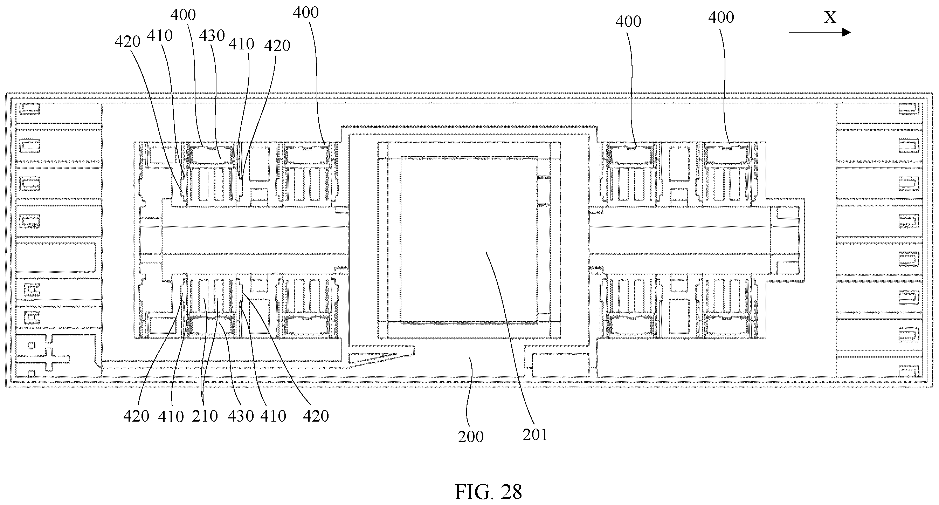

FIG. 28 is a diagram of assembly of a base and a fixed contact assembly in the relay in FIG. 26;

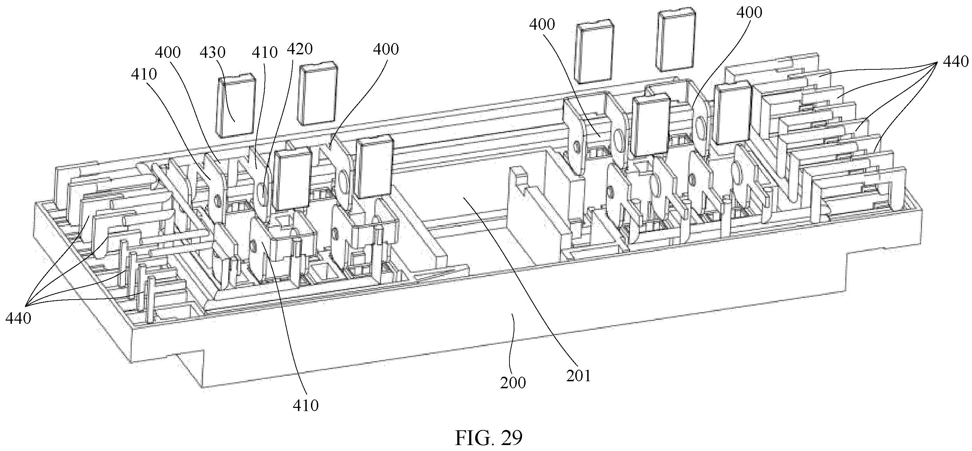

FIG. 29 is a three-dimensional exploded view of the relay in FIG. 26;

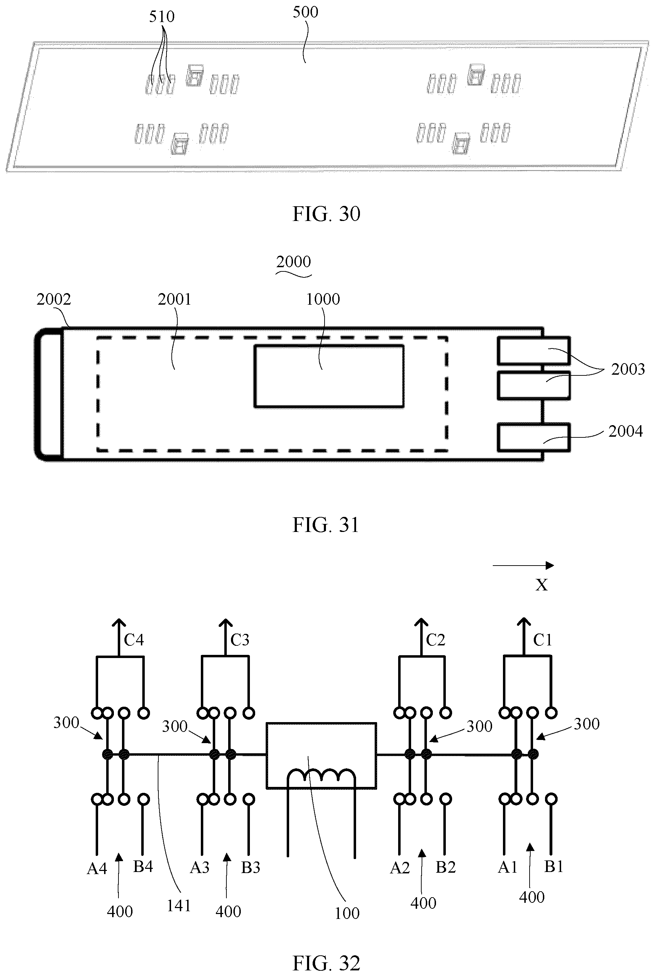

FIG. 30 is a diagram of a structure of a cover body in the relay in FIG. 4;
FIG. 31 is a diagram of a structure of a power distribution box according to an embodiment of this application;
FIG. 32 is an electrical conceptual diagram of a power distribution box used for switching between three-phase four-wire dual power supplies according to an embodiment of this application; and

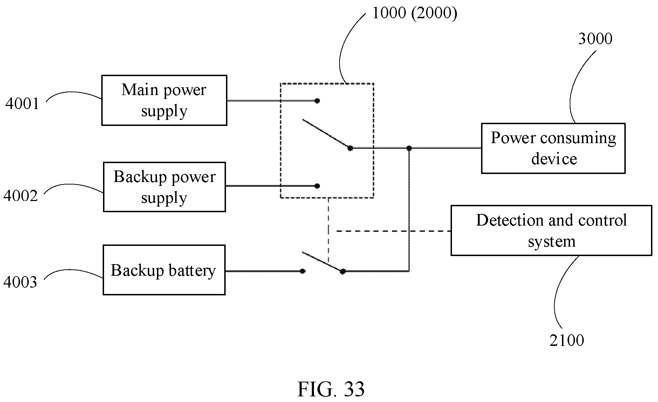

FIG. 33 is an electrical conceptual diagram of a communication device according to an embodiment of this application.

### DESCRIPTION OF EMBODIMENTS

To make technical problems to be resolved, technical solutions, and beneficial effects in this application clearer, the following further describes this application in detail with reference to the accompanying drawings and embodiments. It should be understood that specific embodiments described herein are merely used to explain this application but are not intended to limit this application. Although descriptions of this application are described with reference to some embodiments, it does not mean that features of this application are limited to the implementations. On the contrary, a purpose of introducing the application with reference to the implementations is to cover other options or modifications that may be extended based on the claims of this application. To provide an in-depth understanding of this application, the following descriptions include a plurality of specific details. This application may be alternatively implemented without using these details. In addition, to avoid confusion or blurring a focus of this application, some specific details are omitted from the description. It should be noted that embodiments in this application and the features in embodiments may be mutually combined in the case of no conflict.

It should be noted that when an element is referred to as being "fastened to" or "disposed on" another element, the element may be directly or indirectly on the another element. When an element is referred to as "connected to" another element, the element may be directly or indirectly connected to the another element.

In descriptions of embodiments of this application, it should be noted that, unless otherwise clearly specified and limited, terms such as "mounting" and "connection" should be understood in a broad sense. For example, the "connection" may be a detachable connection, a nondetachable connection; and may be a direct connection, or may be an indirect connection through an intermediate medium. An orientation or position relationship indicated by terms "length", "width", "up", "down", "front", "rear", "left", "right", "vertical", "horizontal", "top", "bottom", "inside", "outside", or the like is based on an orientation or position relationship shown in the accompanying drawings. This is merely intended to facilitate description of this application and simplify the description, but is not intended to indicate or imply that the referred apparatus or element needs to have a specific orientation and be constructed and operated in a specific orientation. Therefore, this cannot be construed as a limitation on this application.

In addition, the terms "first" and "second" are merely intended for a purpose of description, and shall not be understood as an indication or implication of relative importance or implicit indication of the number of indicated technical features. Therefore, a feature limited by "first" or "second" may explicitly or implicitly include one or more features. In the description of this application, "a plurality of" means two or more than two, unless otherwise specifically limited.

The term "and/or" in embodiments of this application describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized.

Refer to FIG. 3 to FIG. 5. Embodiments of this application provide a linear motion electromagnetic mechanism 100, which may be used in a relay 1000. A moving contact assembly 300 is mounted on the linear motion electromagnetic mechanism 100. The linear motion electromagnetic mechanism 100 drives the moving contact assembly 300 to move along a predetermined straight line, so that the moving contact assembly 300 and a fixed contact assembly 400 are in contact or separated. The fixed contact assembly 400 is connected to different circuits. When the moving contact assembly 300 is connected to one of the circuits of the fixed contact assembly 400, switching between circuits can be implemented. One side of the relay 1000 is connected to a main power supply and a backup power supply, and the other side of the relay 1000 is connected to a power consuming device, so that switching between the main power supply and the backup power supply can be implemented.

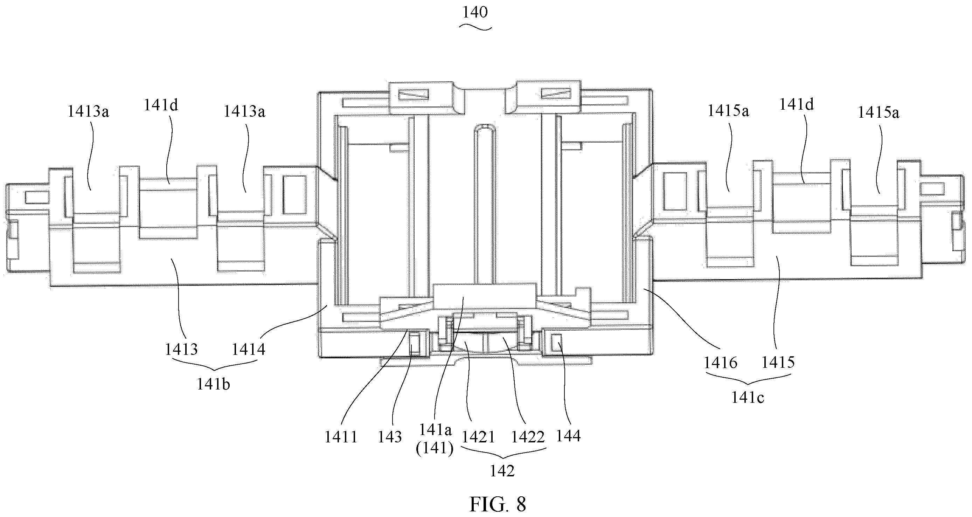

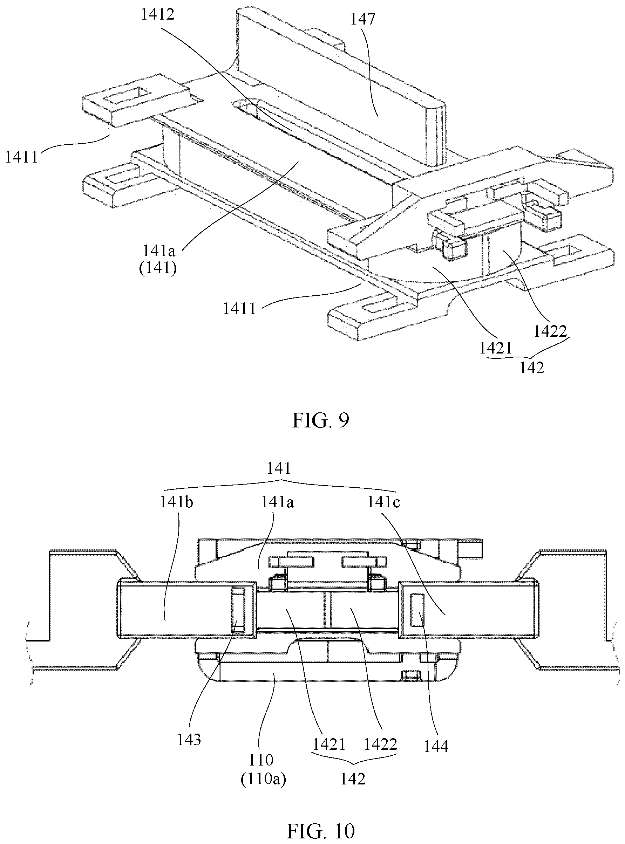

Refer to FIG. 3, FIG. 6, and FIG. 7. The linear motion electromagnetic mechanism 100 provided in embodiments of this application includes a magnetic yoke 110, a first bipolar charging permanent magnet 120, a second bipolar charging permanent magnet 130, and a drive assembly 140. The magnetic yoke 110 has a frame-shaped portion 110a. The first bipolar charging permanent magnet 120 and the second bipolar charging permanent magnet 130 are respectively attached to two opposite inner walls of the frame-shaped portion 110a. The first bipolar charging permanent magnet 120 has a first magnet portion 121 and a second magnet portion 122 that are connected and have opposite magnetic conduction directions. The second bipolar charging permanent magnet 130 has a third magnet portion 131 and a fourth magnet portion 132 that are connected and have opposite magnetic conduction directions. The first magnet portion 121 and the third magnet portion 131 are spaced apart and have a same magnetic conduction direction. The second magnet portion 122 and the fourth magnet portion 132 are spaced apart and have a same magnetic conduction direction. Refer to FIG. 8. The drive assembly 140 includes a movable rack 141, a coil 142, a first moving iron core 143, and a second moving iron core 144. The movable rack 141 is capable of moving back and forth in a direction X perpendicular to an interface between the first magnet portion 121 and the second magnet portion 122, to drive the moving contact assembly 300 to move. The coil 142 is disposed on the movable rack 141. Refer to FIG. 9. The coil 142 includes a first semi-ring portion 1421 and a second semi-ring portion 1422 that are connected. The first semi-ring portion 1421 is located between the first magnet portion 121 and the third magnet portion 131. The second semi-ring portion 1422 is located between the second magnet portion 122 and the fourth magnet portion 132. Both the first moving iron core 143 and the second moving iron core 144 are disposed on the movable rack 141. The first moving iron core 143 is located on a side that is of the first semi-ring portion 1421 and that faces away from the second semi-ring portion 1422. The second moving iron core 144 is located on a side that is of the second semi-ring portion 1422 and that faces away from the first semi-ring portion 1421.

The first bipolar charging permanent magnet 120 (the second bipolar charging permanent magnet 130) may be of an integrated structure or an assembly structure. Each bipolar charging permanent magnet has two magnet portions, and magnetic conduction directions of the two magnet portions are opposite. The bipolar charging permanent magnet may be formed by a permanent magnet that is magnetically charged in opposite directions on both sides by using a middle line as a boundary.

Refer to FIG. 7. The first bipolar charging permanent magnet 120 and the second bipolar charging permanent magnet 130 are spaced apart, so that a first parallel magnetic field 129 and a second parallel magnetic field 139 that are adjacent to each other may be formed in a first direction X. Magnetic field directions of the first parallel magnetic field 129 and the second parallel magnetic field 139 are opposite. This solution features high space utilization and a compact structure. The first direction X is the direction perpendicular to the interface between the two magnet portions of the first bipolar charging permanent magnet 120 (or the second bipolar charging permanent magnet 130).

The coil 142 may be a square coil, a runway coil, or another coil of a similar shape. The first semi-ring portion 1421 and the second semi-ring portion 1422 are names used for ease of description, and may be understood as two portions obtained by splitting the coil 142 through an axis of the coil 142. Actually, the first semi-ring portion 1421 and the second semi-ring portion 1422 are of an integrated structure.

The first semi-ring portion 1421 and the second semi-ring portion 1422 of the coil 142 are respectively disposed in the first parallel magnetic field 129 and the second parallel magnetic field 139. When the coil 142 is powered on, current directions of the first semi-ring portion 1421 and the second semi-ring portion 1422 are opposite (in FIG. 7, the current direction of the first semi-ring portion 1421 is inward, and the current direction of the second semi-ring portion 1422 is outward). The first semi-ring portion 1421 and the second semi-ring portion 1422 are subject to co-directional ampere forces (which are leftward), to drive the coil 142 to translate along one end of the first direction. When the coil 142 is powered on in a reverse direction, the first semi-ring portion 1421 and the second semi-ring portion 1422 are subject to co-directional ampere forces, to drive the coil 142 to translate along the other end of the first direction. The coil 142 is powered on in forward and reverse directions, to implement translation of the movable rack 141 in the forward and reverse directions, so as to drive, with reference to FIG. 4 and FIG. 5, the moving contact assembly 300 on the movable rack 141 to move, so that the moving contact assembly 300 and the fixed contact assembly 400 are in contact or separated.

For example, in an embodiment of FIG. 7, an upper side and a lower side of the first magnet portion 121 in the first bipolar charging permanent magnet 120 are respectively an S pole and an N pole, and an upper side and a lower side of the second magnet portion 122 are respectively an N pole and an S pole. An upper side and a lower side of the third magnet portion 131 in the second bipolar charging permanent magnet 130 are respectively an S pole and an N pole, and an upper side and a lower side of the fourth magnet portion 132 are respectively an N pole and an S pole. The downward first parallel magnetic field 129 is formed between the first magnet portion 121 and the third magnet portion 131. The downward second parallel magnetic field 139 is formed between the second magnet portion 122 and the fourth magnet portion 132.

It may be understood that, different magnet portions in the first bipolar charging permanent magnet 120 and the second bipolar charging permanent magnet 130 may be alternatively magnetized in another manner, provided that the magnetic field directions of the first parallel magnetic field 129 and the second parallel magnetic field 139 distributed in the first direction X are opposite.

Refer to FIG. 6 and FIG. 7. In the linear motion electromagnetic mechanism 100 provided in embodiments of this application, the first bipolar charging permanent magnet 120 and the second bipolar charging permanent magnet 130 are respectively disposed on the two opposite inner walls of the frame-shaped portion 110a of the magnetic yoke 110, and the first parallel magnetic field 129 and the second parallel magnetic field 139 that are in opposite directions are formed between the first bipolar charging permanent magnet 120 and the second bipolar charging permanent magnet 130. The first semi-ring portion 1421 and the second semi-ring portion 1422 of the coil 142 are respectively disposed in the first parallel magnetic field 129 and the second parallel magnetic field 139. The two semi-ring portions of the powered-on coil 142 are subject to co-directional ampere forces, and the coil 142 drives the movable rack 141 to perform translation motion. The coil 142 is bi-directionally powered on, so that the movable rack 141 moves bi-directionally, to implement switching work of the relay 1000. Refer to FIG. 8. The first moving iron core 143 and the second moving iron core 144 are configured to cooperate with the first bipolar charging permanent magnet 120 and the second bipolar charging permanent magnet 130 to form closed magnetic lines when the movable rack 141 is at a switch-on position or a switch-off position, so as to form a holding force on the movable rack 141 and limit a position of the movable rack 141. The linear motion electromagnetic mechanism 100 in this application is different from a conventional relay in that one magnetic field cavity provides bipolar magnetic fields, and the powered-on coil 142 is subject to the ampere forces in the bipolar magnetic fields to drive the movable rack 141 to translate. The linear motion electromagnetic mechanism 100 uses a small quantity of parts and has a smaller overall structural thickness and a compact structure, and resolves a problem that in a conventional multi-magnetic field cavity electromagnetic mechanism, it is difficult to reduce a size because a single magnetic field cavity provides a single magnetic pole.

For example, at a same process level, a thickness of a relay having the conventional multi-magnetic field cavity electromagnetic mechanism is approximately 30 mm. A 1 U power distribution box needs to be configured, and a 0.5 U power distribution box cannot be used. Refer to FIG. 4. For the relay 1000 having the linear motion electromagnetic mechanism 100 in embodiments of this application, a thickness T0 of the relay 1000 may be made to be approximately 13.5 mm, which is approximately 55% less than the thickness of the foregoing conventional relay, and the relay 1000 may be assembled in the 0.5 U power distribution box. U is a unit that indicates an external size of a server, and is an abbreviation for unit. A specific size is determined by the American Electronic Industries Alliance. A basic unit of a thickness is 4.445 cm. 1 U is 4.445 cm.

In a conventional clapper-type electromagnetic mechanism shown in FIG. 1, a sliding block 17 is slidably disposed on a base along a straight line. When a coil 13 is powered on, a push arm 161 on an armature 16 swings, and the push arm 161 drives the sliding block 17 to translate, so as to drive a moving contact plate 18 to translate, so that the moving contact plate 18 and a fixed contact plate 19 are in contact or separated. Rotation motion of the push arm 161 is converted into a horizontal motion component and a vertical motion component. Only the horizontal motion component has effect on movement of the sliding block 17. Conversion efficiency of an effective movement distance is low, and an energy consumption loss is large. The sliding block 17 has a low start speed, and the coil 13 has long excitation time, which makes it difficult to implement high-speed switching. In addition, a diameter of the coil 13 is excessively thin, and a quantity of turns of the coil 13 is excessively large. As a result, inductance and resistance inside the coil 13 are excessively large. When capacitor discharge driving is used, a current rise rate of the coil 13 is low, which is not conducive to implementing high-speed switching of a relay.

Refer to FIG. 7. At a same process level, the linear motion electromagnetic mechanism 100 in embodiments of this application is different from the conventional relay in that the first parallel magnetic field 129 and the second parallel magnetic field 139 are formed between the first bipolar charging permanent magnet 120 and the second bipolar charging permanent magnet 130 that are spaced apart, the two parallel magnetic fields have large magnetic induction intensity, and a quantity of turns of the coil 142 may be set to be small. The powered-on coil 142 is subject to large ampere forces in the magnetic field, and has short excitation time. In a full motion stroke of the coil 142, a main motion air gap remains unchanged, can provide stable electromagnetic output, and has a long motion stroke, an output force curve similar to that of a repulsive force mechanism, a stable output force, and a fast movement speed. The relay 1000 having the linear motion electromagnetic mechanism 100 has short switching time, and can implement quick mechanical switching at a millisecond level (for example, 3 ms to 4 ms), to implement an ultra-thin liquid cooling heat dissipation power supply. The switching time refers to duration from time when the linear motion electromagnetic mechanism 100 starts to obtain an electrical signal to time when a circuit B stops bouncing and is completely connected when the relay 1000 moves from a circuit A to the circuit B.

Refer to FIG. 6 and FIG. 7. When the bipolar charging permanent magnet is disposed, both the first bipolar charging permanent magnet 120 and the second bipolar charging permanent magnet 130 are panel-shaped. The first bipolar charging permanent magnet 120 and the second bipolar charging permanent magnet 130 are spaced apart, and are attached to the two opposite inner walls of the frame-shaped portion 110a of the magnetic yoke 110. In this way, the overall structural thickness is small, and the structure is in contact.

The first bipolar charging permanent magnet 120 and the second bipolar charging permanent magnet 130 may be disposed with an equal length. That is, the first bipolar charging permanent magnet 120 and the second bipolar charging permanent magnet 130 have an equal size in the direction X perpendicular to an interface between two magnet portions of any bipolar charging permanent magnet. The interface between the first magnet portion 121 and the second magnet portion 122 in the first bipolar charging permanent magnet 120, an interface between the third magnet portion 131 and the fourth magnet portion 132 in the second bipolar charging permanent magnet 130, and a symmetry plane of the frame-shaped portion 110a are set on a same plane, to form the first parallel magnetic field 129 and the second parallel magnetic field 139 of similar spatial sizes in the first direction X.

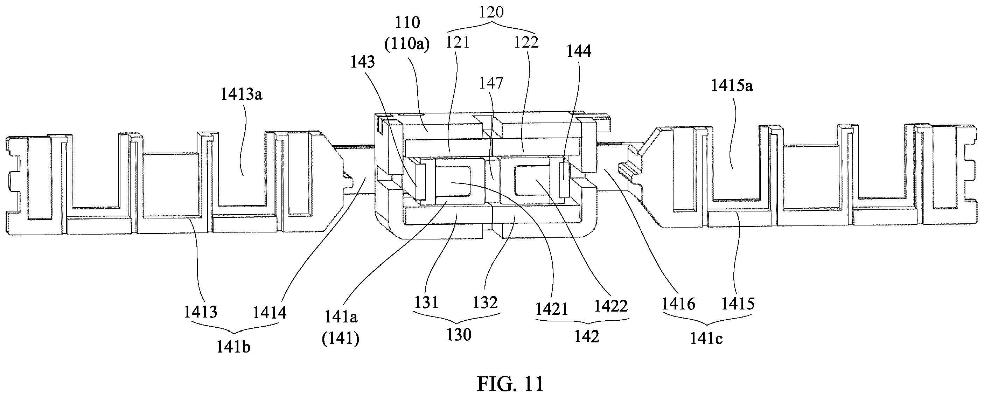

Refer to FIG. 10 to FIG. 12. In some embodiments, both the first moving iron core 143 and the second moving iron core 144 are located inside the frame-shaped portion 110a. The first moving iron core 143 is located between the first magnet portion 121 and the third magnet portion 131, and the second moving iron core 144 is located between the second magnet portion 122 and the fourth magnet portion 132. Two opposite sides of the first moving iron core 143 respectively face the first magnet portion 121 and the third magnet portion 131, and two opposite sides of the second moving iron core 144 respectively face the second magnet portion 122 and the fourth magnet portion 132.

In this solution, the first moving iron core 143 and the second moving iron core 144 are disposed in the frame-shaped portion 110a of the magnetic yoke 110 and are respectively located outside two sides of the coil 142. When the movable rack 141 is at the switch-on position or the switch-off position, specific magnetic lines are formed between the first bipolar charging permanent magnet 120, the second bipolar charging permanent magnet 130, the magnetic yoke 110, and the first moving iron core 143 (the second moving iron core 144), to form a holding force on the movable rack 141 and limit the position of the movable rack 141, so that cases in which the movable rack 141 is shaken due to interference are reduced, and the moving contact assembly 300 and the fixed contact assembly 400 on the movable rack 141 are reliably in contact or separated.

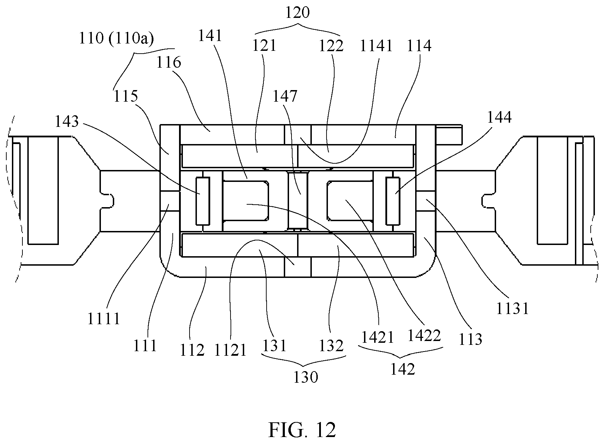

Refer to FIG. 6 and FIG. 12. In some embodiments, to adjust the holding force on the movable rack 141 when the movable rack 141 is at the switch-on position or the switch-off position, the frame-shaped portion 110a includes a first segment 111, a second segment 112, a third segment 113, and a fourth segment 114 that are sequentially connected. The first bipolar charging permanent magnet 120 is attached to an inner wall of the fourth segment 114. The second bipolar charging permanent magnet 130 is attached to an inner wall of the second segment 112. The first segment 111 is disposed opposite to the first moving iron core 143. The third segment 113 is disposed opposite to the second moving iron core 144. The first segment 111 has a first opening 1111 at a position corresponding to the first moving iron core 143. The third segment 113 has a second opening 1131 at a position corresponding to the second moving iron core 144.

In this solution, the openings are provided at the positions that are of the frame-shaped portion 110a of the magnetic yoke 110 and that correspond to the first moving iron core 143 and the second moving iron core 144, to serve as magnetic isolation areas, and parallel magnetic resistance of the magnetic yoke 110 and the first moving iron core 143 (or the second moving iron core 144) at a predetermined position is changed, so that more magnetic lines pass through the first moving iron core 143 (or the second moving iron core 144) instead of directly passing along the first segment 111 or the third segment 113, a stronger holding force is formed on the first moving iron core 143 and the second moving iron core 144 at the switch-on position or the switch-off position, and cases in which the movable rack 141 is shaken due to interference are reduced. For example, when the first moving iron core 143 is attached to the magnetic yoke 110, a length of the first opening 1111 is increased, so that magnetic resistance of the first segment 111 of the magnetic yoke 110 can be increased, and the magnetic lines move from the first opening 1111 to the first moving iron core 143, which is equivalent to increasing the magnetic lines passing through the first moving iron core 143, to increase the holding force.

When the magnetic yoke 110 includes a U-shaped yoke iron 115 and a top cover 116 that are connected, the first segment 111, the second segment 112, and the third segment 113 that are sequentially connected are the U-shaped yoke iron 115, and the fourth segment 114 is the top cover 116. Openings are provided on two opposite arms of the U-shaped yoke iron 115, so that more magnetic lines pass through the first moving iron core 143 or the second moving iron core 144, to form a stronger holding force.

The first opening 1111 may include a plurality of first sub-openings distributed on a straight line, and the second opening 1131 may include a plurality of second sub-openings distributed on a straight line. In this way, magnetic resistance of the magnetic yoke 110 at the predetermined position can also be changed, so that more magnetic lines pass through the first moving iron core 143 or the second moving iron core 144. In addition, only one first opening 1111 and one second opening 1131 may be provided.

Refer to FIG. 9 and FIG. 12. In some embodiments, to provide a greater holding force to reliably position the movable rack 141, the drive assembly 140 further includes a third moving iron core 147. The third moving iron core 147 is disposed on the movable rack 141. The third moving iron core 147 is located inside the coil 142. Two opposite sides of the third moving iron core 147 respectively face the first bipolar charging permanent magnet 120 and the second bipolar charging permanent magnet 130.

In this solution, the third moving iron core 147 is disposed inside the coil 142, and the third moving iron core 147 is fastened to the movable rack 141. When the movable rack 141 is at the switch-on position or the switch-off position, a closed magnetic circuit that sequentially passes through the first bipolar charging permanent magnet 120, the third moving iron core 147, the second bipolar charging permanent magnet 130, and the magnetic yoke 110 is generated, to associate the first bipolar charging permanent magnet 120 with the second bipolar charging permanent magnet 130, and increase utilization of the magnetic field. After the first moving iron core 143 and the second moving iron core 144 are configured, a specific holding force can be formed on the movable rack 141. After the third moving iron core 147 is configured, a greater holding force can be formed, so that the cases in which the movable rack 141 is shaken due to interference can be more effectively reduced, operation reliability is improved, and the moving contact assembly 300 and the fixed contact assembly 400 on the movable rack 141 are reliably in contact or separated. The third moving iron core 147 may be mounted in a slot 1412 of the movable rack 141.

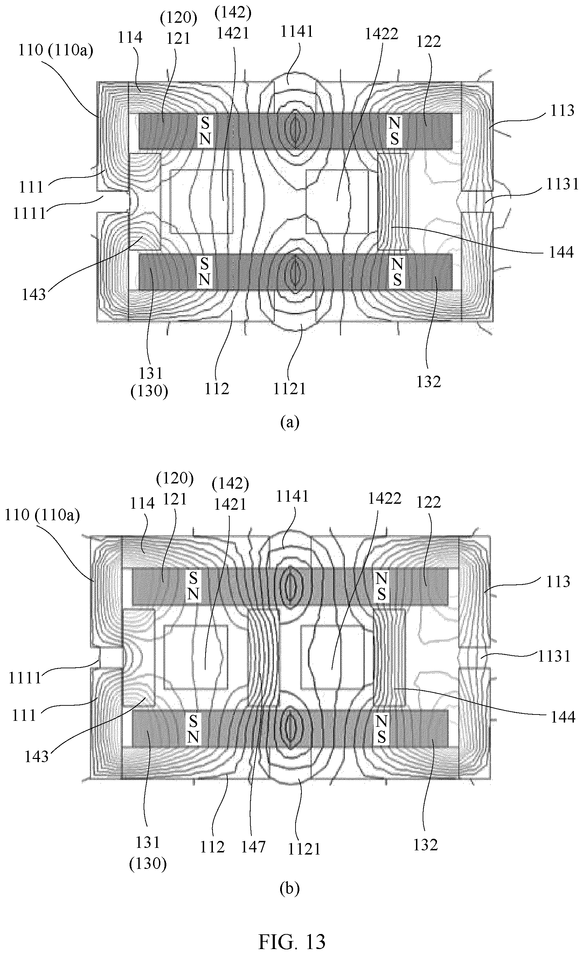

Refer to (a) in FIG. 13. In a case in which the drive assembly 140 is not configured with the third moving iron core, the first segment 111 of the magnetic yoke 110 has the first opening 1111, and the third segment 113 has the second opening 1131, when the first moving iron core 143 is attached to the first segment 111 of the magnetic yoke 110, a first group of closed magnetic circuits that sequentially pass through the first bipolar charging permanent magnet 120, the first moving iron core 143, and the first segment 111 and the fourth segment 114 of the magnetic yoke 110 are generated, and a second group of closed magnetic circuits that sequentially pass through the second bipolar charging permanent magnet 130, the second segment 112 and the first segment 111 of the magnetic yoke 110, and the first moving iron core 143 are further generated. The holding force is provided by the two groups of closed magnetic circuits. A group of closed magnetic circuits that sequentially pass through the first bipolar charging permanent magnet 120, the fourth segment 114, the third segment 113, and the second segment 112 of the magnetic yoke 110, the second bipolar charging permanent magnet 130, and the second moving iron core 144 are further generated. The closed magnetic circuits provide a force that is opposite to the holding force, which reduces the holding force.

Refer to (b) in FIG. 13. After the third moving iron core 147 is configured, in addition to the first group of closed magnetic circuits and the second group of closed magnetic circuits, a third group of closed magnetic circuits that sequentially pass through "the first bipolar charging permanent magnet 120, the third moving iron core 147, the second bipolar charging permanent magnet 130, the second segment 112 and the first segment 111 of the magnetic yoke 110, the first moving iron core 143, and the first segment 111 and the fourth segment 114 of the magnetic yoke 110" are further generated. The holding force is provided by the three groups of closed magnetic circuits. The solution in which the third moving iron core 147 is configured is different from the solution in which the third moving iron core 147 is not configured in that there are more magnetic lines, and the formed holding force is large. Under a same process, the holding force can be increased by 70% in the solution in which the third moving iron core 147 is configured. This overcomes a problem that a holding force is small and difficult to improve in a case of miniaturization of a conventional electromagnetic mechanism.

It may be understood that, the solution in which the third moving iron core 147 is configured is different from the solution in which the third moving iron core is not configured in that a greater holding force can also be generated when the second moving iron core 144 is attached to the third segment 113 of the magnetic yoke 110.

Refer to FIG. 12. In some embodiments, to further adjust the holding force of the movable rack 141 when the movable rack 141 is at the switch-on position or the switch-off position, when the drive assembly 140 includes the third moving iron core 147 located inside the coil 142, the second segment 112 has a third opening 1121 at a position corresponding to the interface between the third magnet portion 131 and the fourth magnet portion 132, and the fourth segment 114 has a fourth opening 1141 at a position corresponding to the interface between the first magnet portion 121 and the second magnet portion 122.

In this solution, the opening is provided at the position that is of the frame-shaped portion 110a of the magnetic yoke 110 and that corresponds to the third moving iron core 147, to serve as a magnetic isolation area, and parallel magnetic resistance of the magnetic yoke 110 and the first bipolar charging permanent magnet 120 (or the second bipolar charging permanent magnet 130) at a predetermined position is changed, so that a direction of the magnetic lines is changed, a stronger holding force is formed on the third moving iron core 147 at the switch-on position or the switch-off position, and the cases in which the movable rack 141 is shaken due to interference are reduced.

The third opening 1121 may include a plurality of third sub-openings distributed on a straight line, and the fourth opening 1141 may include a plurality of fourth sub-openings distributed on a straight line. In this way, magnetic resistance of the magnetic yoke 110 at the predetermined position can also be changed, and the direction of the magnetic lines can be changed to increase the holding force. In addition, only one third opening 1121 and one fourth opening 1141 may be provided.

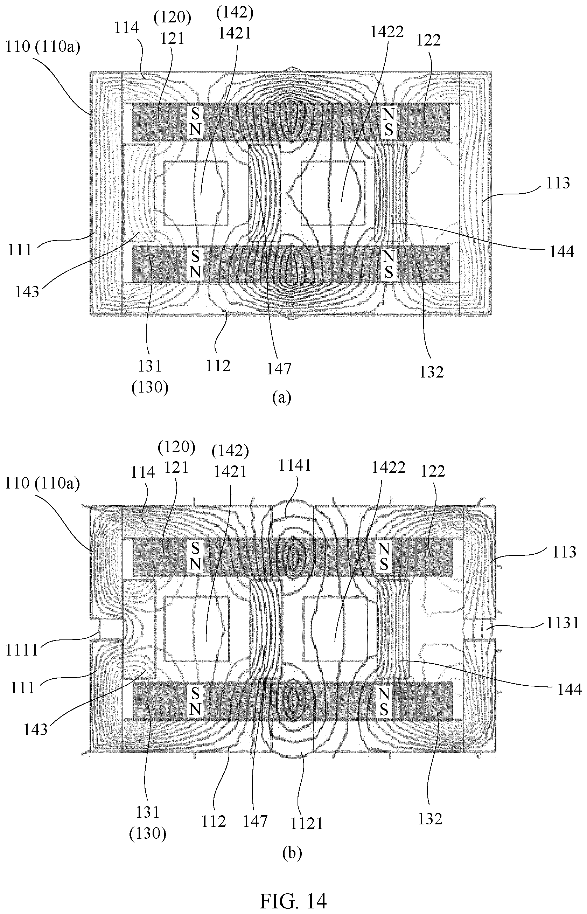

Refer to (a) in FIG. 14. In a case in which the magnetic yoke 110 is not provided with the first opening, the second opening, the third opening, and the fourth opening, when the first moving iron core 143 is attached to the first segment 111 of the magnetic yoke 110, a group of closed magnetic circuits that sequentially pass through the first bipolar charging permanent magnet 120, the first moving iron core 143, the second bipolar charging permanent magnet 130, and the second segment 112, the first segment 111, and the fourth segment 114 of the magnetic yoke 110 are generated. This group of closed magnetic circuits provide the holding force. A group of closed magnetic circuits that sequentially pass through the first bipolar charging permanent magnet 120, the fourth segment 114 of the magnetic yoke 110, the first bipolar charging permanent magnet 120, the third moving iron core 147, the second bipolar charging permanent magnet 130, the third segment 113 of the magnetic yoke 110, the second bipolar charging permanent magnet 130, and the second moving iron core 144 are further generated. This group of closed magnetic circuits provide a force that is opposite to the holding force, which reduces the holding force.

Refer to (b) in FIG. 14. In a case in which the magnetic yoke 110 is provided with the first opening 1111, the second opening 1131, the third opening 1121, and the fourth opening 1141, when the first moving iron core 143 is attached to the first segment 111 of the magnetic yoke 110, the first group of closed magnetic circuits that sequentially pass through the first bipolar charging permanent magnet 120, the first moving iron core 143, and the first segment 111 and the fourth segment 114 of the magnetic yoke 110 are generated, and the second group of closed magnetic circuits that sequentially pass through the second bipolar charging permanent magnet 130, the second segment 112 and the first segment 111 of the magnetic yoke 110, and the first moving iron core 143 are further generated. The third group of closed magnetic circuits that sequentially pass through the first bipolar charging permanent magnet 120, the third moving iron core 147, the second bipolar charging permanent magnet 130, the second segment 112 and the first segment 111 of the magnetic yoke 110, the first moving iron core 143, and the first segment 111 and the fourth segment 114 of the magnetic yoke 110 are further generated. The holding force is provided by the three groups of closed magnetic circuits. The solution in which the magnetic yoke 110 is provided with the opening is different from the solution in which the magnetic yoke 110 is not provided with the opening in that there are more magnetic lines, and the formed holding force is large.

It may be understood that, the solution in which the magnetic yoke 110 is provided with the opening is different from the solution in which the magnetic yoke 110 is not provided with the opening in that a greater holding force can also be generated when the second moving iron core 144 is attached to the third segment 113 of the magnetic yoke 110.

In the conventional clapper-type electromagnetic mechanism shown in FIG. 1, a holding force provided at a switch-off position or a switch-on position is small. At a current process level, a contact point holding force is in a range of 0.5 newton (N) to 0.8 N, and it is difficult to provide a large holding force.

In the conventional multi-magnetic field cavity electromagnetic mechanism shown in FIG. 2, each magnetic field cavity 21 is configured with an auxiliary permanent magnet 212 to provide a holding force. Because some main permanent magnets 211 and auxiliary permanent magnets 212 are magnetized in opposite directions, an overall structure is complex, and assembly is difficult. Strength of the permanent magnet is poor, the thin auxiliary permanent magnet 212 becomes a weak position of overall mechanical strength, and reliability is low. If the auxiliary permanent magnet 212 is directly removed, a holding force requirement cannot be met, but retaining the auxiliary permanent magnet 212 is not conducive to miniaturization of an entire structure.

In an embodiment of this application, the thickness T0 of the relay 1000 having the linear motion electromagnetic mechanism 100 is made to be approximately 13.5 mm, and the thickness is small. In the solution in which the magnetic yoke 110 is provided with the first opening 1111, the second opening 1131, the third opening 1121, and the third opening 1121, and the first moving iron core 143, the second moving iron core 144, and the third moving iron core 147 are configured, a holding force above 40 newtons (N) may be provided, a structure is simple, and reliability is high.

Refer to FIG. 9, FIG. 15, and FIG. 16. When the movable rack 141 is disposed, the movable rack 141 includes a coil rack 141a, a first vehicle body 141b, and a second vehicle body 141c. The first vehicle body 141b and the second vehicle body 141c are respectively fastened to two opposite ends of the coil rack 141a. The coil 142 is disposed on the coil rack 141a. The first vehicle body 141b is configured to mount the first moving iron core 143 and a part of moving contact assemblies 300, and the second vehicle body 141c is configured to mount the second moving iron core 144 and a part of moving contact assemblies 300.

In this solution, the movable rack 141 is configured as an assembly of a plurality of mechanical parts, and is easy to form and assemble. The first vehicle body 141b and the second vehicle body 141c are respectively disposed at the two ends of the coil rack 141a, so that the coil rack 141a smoothly drives the first vehicle body 141b and the second vehicle body 141c to translate, and the moving contact assemblies 300 on the first vehicle body 141b or the second vehicle body 141c reliably translate. A part of moving contact assemblies 300 are separately disposed on the first vehicle body 141b and the second vehicle body 141c, so that fixed contact assemblies 400 corresponding to different moving contact assemblies 300 are spaced apart at a predetermined distance, a structure is easy to assemble, and operation is reliable.

For example, the magnetic yoke 110 includes the U-shaped yoke iron 115 and the top cover 116. Refer to FIG. 9. The coil 142 may be first mounted on the coil rack 141a. Refer to FIG. 16. The first vehicle body 141b and the second vehicle body 141c are then mounted on the two ends of the coil rack 141a, then the coil rack 141a is mounted in the U-shaped yoke iron 115, and finally, the top cover 116 is mounted on the U-shaped yoke iron 115. The U-shaped yoke iron 115 and the top cover 116 enclose the frame-shaped portion 110a.

For example, refer to FIG. 15. The first vehicle body 141b and the second vehicle body 141c each are provided with two moving contact assemblies 300, which cooperate with four fixed contact assemblies 400, so that switching between three-phase four-wire alternating-current dual power supplies under a miniaturized relay can be implemented, and switching between the dual power supplies with four normally open contact points and four normally closed contact points is implemented. In another embodiment, the first vehicle body 141b and the second vehicle body 141c may be configured with another quantity of moving contact assemblies 300, which cooperate with corresponding fixed contact assemblies 400, so that switching between other dual power supplies under the miniaturized relay can be implemented.

Refer to FIG. 16 and FIG. 17. When the first vehicle body 141b and the second vehicle body 141c are disposed, the first vehicle body 141b includes a first mounting arm 1413 and a first frame portion 1414 connected to the first mounting arm 1413, the first mounting arm 1413 has a first mounting groove 1413a configured to mount a moving contact. The first frame portion 1414 is fastened to the coil rack 141a. The first moving iron core 143 is fastened to the first frame portion 1414.

The second vehicle body 141c includes a second mounting arm 1415 and a second frame portion 1416 connected to the second mounting arm 1415. The second mounting arm 1415 has a second mounting groove 1415a configured to mount a moving contact. The second frame portion is fastened to the coil rack 141a. The second moving iron core 144 is fastened to the second frame portion 1416.

In this solution, the vehicle body is configured as the mounting arm and the frame portion, the frame portion may be configured to mount the moving iron core, and the frame portion has good structural strength. The vehicle body is reliably connected to the coil rack 141a by using the frame portion, and the moving contact assembly 300 is mounted by using the mounting arm. A structure is simple and is easy to assemble. The mounting arm may extend in the first direction X, and has a compact structure.

Refer to FIG. 9, FIG. 16, FIG. 17, and FIG. 18. When the coil rack 141a, the first vehicle body 141b, and the second vehicle body 141c are assembled, the coil rack 141a has a first positioning groove 1411. The first frame portion 1414 is connected to one end of the first mounting arm 1413. A side that is of the first frame portion 1414 and that faces away from the first mounting arm 1413 is inserted into two first positioning grooves 1411. The first frame portion 1414 and the coil rack 141a may be connected through a fastener 141e, hot melting, bonding, or the like. An assembly relationship between the second vehicle body 141c and the coil rack 141a is similar, and details are not described again.

Refer to FIG. 19. Assembly of the first frame portion 1414 and the first moving iron core 143 is used as an example. When the vehicle body and the moving iron core are assembled, the first moving iron core 143 may be mounted in an assembly groove 141f of the first frame portion 1414, and two ends of the first moving iron core 143 may be inserted into two hole positions 141g of the first frame portion 1414. Refer to FIG. 17. The first moving iron core 143 can be conveniently and reliably fastened to the first frame portion 1414. An assembly relationship between the second moving iron core 144 and the second moving iron core 144 is similar, and details are not described herein again.

In some other embodiments, the first vehicle body 141b and the second vehicle body 141 may be alternatively set as other structures, provided that the moving contact assembly 300 can be mounted, and the moving contact assembly 300 can be driven to translate.

In some other embodiments, the coil rack 141a, the first vehicle body 141b, and the second vehicle body 141c in the movable rack 141 may be alternatively of an integrally formed structure, where assembly of the coil 142 and a plurality of moving iron cores can also be implemented, so that the powered-on coil 142 drives the movable rack 141 to translate back and forth relative to the magnetic yoke 110.

Refer to FIG. 20 and FIG. 21. When the magnetic yoke 110 is disposed, the magnetic yoke 110 includes the U-shaped yoke iron 115 and the top cover 116. Two ends of the top cover 116 are respectively fastened to two ends of the U-shaped yoke iron 115. The first bipolar charging permanent magnet 120 is attached to an inner wall of the top cover 116. The second bipolar charging permanent magnet 130 is attached to an inner wall of the U-shaped yoke iron 115.

In this solution, the magnetic yoke 110 is configured to seal magnetic lines inside a predetermined area, to enhance the magnetic field. The magnetic yoke 110 is configured as an assembly of the U-shaped yoke iron 115 and the top cover 116, and is easy to form and assemble. Both the U-shaped yoke iron 115 and the top cover 116 may be made of metal plate parts.

Refer to FIG. 20. When the first bipolar charging permanent magnet 120, the second bipolar charging permanent magnet 130, and the magnetic yoke 110 are assembled, the U-shaped yoke iron 115 and the top cover 116 are positioned and assembled by using a first boss 1161 and a first notch 1151 that are adapted to each other; and/or the first bipolar charging permanent magnet 120 and the top cover 116 are positioned and assembled by using a second boss 1162 and a second notch 123 that are adapted to each other; and/or the second bipolar charging permanent magnet 130 and the U-shaped yoke iron 115 are positioned and assembled by using a third boss 1152 and a third notch 133 that are adapted to each other.

In this solution, two mechanical parts are positioned and assembled by using a boss and a notch that are adapted to each other. The boss can extend into the notch, to facilitate quick positioning and assembly of the two mechanical parts. For example, that the U-shaped yoke iron 115 and the top cover 116 are positioned and assembled by using the first boss 1161 and the first notch 1151 that are adapted to each other may be that the U-shaped yoke iron 115 has the first notch 1151 and the top cover 116 has the first boss 1161, or may be that the U-shaped yoke iron 115 has the first boss and the top cover 116 has the first notch. During assembly, the first boss 1161 is disposed in the first notch 1151 in alignment, so that the top cover 116 can be positioned on the U-shaped yoke iron 115, to improve assembly efficiency. Similarly, the first bipolar charging permanent magnet 120 and the top cover 116 can be quickly positioned and assembled by using the boss and the notch that are adapted to each other, and the second bipolar charging permanent magnet 130 and the U-shaped yoke iron 115 can be quickly positioned and assembled by using the boss and the notch that are adapted to each other.

The U-shaped yoke iron 115 and the top cover 116 may be connected through laser welding or the like. The first bipolar charging permanent magnet 120 and the top cover 116 may be connected through magnetic attraction, and the second bipolar charging permanent magnet 130 and the U-shaped yoke iron 115 may be connected through magnetic attraction. No glue is required for bonding and fastening, which reduces generation of harmful gas that may corrode components.

Refer to FIG. 22 to FIG. 24. In some other embodiments, the magnetic yoke 110 includes a plurality of metal plate parts 117, and the plurality of metal plate parts 117 enclose the frame-shaped portion 110a. In this manner, the magnetic lines can also be sealed inside the predetermined area, to enhance the magnetic field. The magnetic yoke 110 may be implemented in a plurality of manners. For example, four linear-shaped metal plate parts are connected to form the frame-shaped portion, two L-shaped metal plate parts are connected to form the frame-shaped portion, or one L-shaped metal plate part and two linear-shaped metal plate parts are connected to form the frame-shaped portion. It may be understood that the plurality of metal plate parts 117 may be positioned by using bosses and notches that are adapted to each other, and are connected through laser welding or the like.

In some embodiments, a plurality of groups of first bipolar charging permanent magnets 120 and second bipolar charging permanent magnets 130 are disposed. There are a plurality of coils 142. The plurality of coils 142 are connected in series. The plurality of coils 142 are distributed between the plurality of groups of first bipolar charging permanent magnets 120 and second bipolar charging permanent magnets 130 in a one-to-one correspondence.

In this solution, the plurality of groups of bipolar charging permanent magnets and the coils 142 are configured. In this way, the movable rack 141 has a larger output force, to drive a larger load to move, that is, drive more moving contact assemblies 300 to translate, so that the linear motion electromagnetic mechanism 100 is applicable to switching between three-phase four-wire 380-V-alternating-current dual power supplies or other multi-wire power supplies.

For example, a plurality of first bipolar charging permanent magnets 120 are sequentially arranged in the first direction X, and a plurality of second bipolar charging permanent magnets 130 are sequentially arranged in the first direction X. The plurality of coils 142 are sequentially arranged in the first direction X, and are disposed corresponding to the groups of first bipolar charging permanent magnets 120 and second bipolar charging permanent magnets 130. The first direction X is a straight-line movement direction of the movable rack 141.

For example, a plurality of first bipolar charging permanent magnets 120 are sequentially arranged in a second direction Y, and a plurality of second bipolar charging permanent magnets 130 are sequentially arranged in the second direction Y. The plurality of coils 142 are sequentially arranged in the second direction Y, and are disposed corresponding to the groups of first bipolar charging permanent magnets 120 and second bipolar charging permanent magnets 130. The second direction Y is separately perpendicular to the first direction X and a thickness direction of the relay.

For example, the plurality of groups of first bipolar charging permanent magnets 120 and second bipolar charging permanent magnets 130 are distributed in a third direction Z, and the coil 142 is disposed between each group of the first bipolar charging permanent magnet 120 and the second bipolar charging permanent magnet 130. The third direction Z is the thickness direction of the relay.

Refer to FIG. 25. In some embodiments, both the first moving iron core 143 and the second moving iron core 144 are located outside the frame-shaped portion 110a. The first moving iron core 143 is located outside a same end part of the first magnet portion 121 and the third magnet portion 131. The second moving iron core 144 is located outside a same end part of the second magnet portion 122 and the fourth magnet portion 132. A first holding permanent magnet 145 is disposed on the first moving iron core 143. A second holding permanent magnet 146 is disposed on the second moving iron core 144. Magnetic conduction directions of the first holding permanent magnet 145 and the second holding permanent magnet 146 are opposite.

In this solution, the first moving iron core 143 and the second moving iron core 144 are disposed outside the frame-shaped portion 110a of the magnetic yoke 110, to facilitate structural assembly. The first moving iron core 143, the second moving iron core 144, the first holding permanent magnet 145, and the second holding permanent magnet 146 provide a holding force for the relay 1000. The powered-on coil 142 may drive the first moving iron core 143, the second moving iron core 144, the first holding permanent magnet 145, and the second holding permanent magnet 146 to move back and forth in the first direction X relative to the magnetic yoke 110.

When the magnetic yoke 110 includes the U-shaped yoke iron 115 and the top cover 116, the U-shaped yoke iron 115, the top cover 116, and the coil rack may be first assembled, and then the first moving iron core 143, the second moving iron core 144, the first vehicle body, and the second vehicle body are assembled, which solves a problem that the U-shaped yoke iron 115 and the top cover 116 need to be connected in a cavity of the first vehicle body and the second vehicle body, and simplifies assembly.

For example, the first moving iron core 143 is roughly set to be U-shaped, a groove of the first moving iron core 143 faces the first segment 111 of the magnetic yoke 110, and the first holding permanent magnet 145 is disposed at a groove position to provide a holding force, so as to compensate for a holding force reduced because the first moving iron core 143 is externally disposed. The second moving iron core 144 is roughly set to be U-shaped, a groove of the second moving iron core 144 faces the third segment 113 of the magnetic yoke 110, and the second holding permanent magnet 146 is disposed at a groove position to provide a holding force, so as to compensate for a holding force reduced because the second moving iron core 144 is externally disposed.

Refer to FIG. 25. In some embodiments, to provide a greater holding force to reliably position the movable rack, the drive assembly 140 further includes the third moving iron core 147. The third moving iron core 147 is disposed on the movable rack. The third moving iron core 147 is located inside the coil 142. The two opposite sides of the third moving iron core 147 respectively face the first bipolar charging permanent magnet 120 and the second bipolar charging permanent magnet 130.

In this solution, the third moving iron core 147 is disposed inside the coil 142, and the third moving iron core 147 is fastened to the movable rack. The first moving iron core 143, the second moving iron core 144, the third moving iron core 147, the first holding permanent magnet 145, and the second holding permanent magnet 146 provide a holding force for the relay 1000. The powered-on coil 142 may drive the first moving iron core 143, the second moving iron core 144, the third moving iron core 147, the first holding permanent magnet 145, and the second holding permanent magnet 146 to move back and forth in the first direction X relative to the magnetic yoke 110. The third moving iron core 147 associates the first bipolar charging permanent magnet 120 with the second bipolar charging permanent magnet 130, to increase utilization of the magnetic field. After the first moving iron core 143 and the second moving iron core 144 are configured, a holding force can be formed on the movable rack. After the third moving iron core 147 is configured, a greater holding force can be formed, so that the cases in which the movable rack is shaken due to interference can be more effectively reduced, operation reliability is improved, and the moving contact assembly and the fixed contact assembly on the movable rack are reliably in contact or separated. The third moving iron core 147 may be mounted in the slot of the movable rack.

Refer to FIG. 3 to FIG. 5. Embodiments of this application provide the relay 1000, including a base 200, one or more moving contact assemblies 300, one or more fixed contact assemblies 400, and the foregoing linear motion electromagnetic mechanism 100. The one or more fixed contact assemblies 400 are disposed on the base 200. The one or more moving contact assemblies 300 are disposed on the movable rack 141. The one or more moving contact assemblies 300 and the one or more fixed contact assemblies 400 are disposed in a one-to-one correspondence.

The relay 1000 provided in embodiments of this application is configured with the foregoing linear motion electromagnetic mechanism 100. One magnetic field cavity provides bipolar magnetic fields, and the powered-on coil 142 is subject to ampere forces in the bipolar magnetic fields to drive the movable rack 141 to translate, so as to drive the moving contact assembly 300 on the movable rack 141 and the fixed contact assembly 400 on the base 200 to perform a switch-on/switch-off action. The linear motion electromagnetic mechanism 100 has a smaller thickness and a compact structure.

The relay 1000 may be used in a scenario of switching between a main power supply and a backup power supply. For example, in a dual-circuit hybrid power supply scenario of a high-security-level communication device such as an internet data center, a public cloud server, and a switch, a scenario in which the backup power supply is quickly switched when the main power supply experiences a power failure is implemented, to reduce power failure time of a system, reduce data losses, and avoid a service loss. The relay 1000 can be used to switch on and switch off alternating-current (alternating current, AC) and high-voltage-direct-current (high voltage direct current, HVDC) high-power power supplies, implement quick switching of electric energy, and reduce power interruption time in a switching process. The relay 1000 can have a clear physical fracture, and is more secure than a power electronic switch.

Refer to FIG. 26. When the base 200 is disposed, the base 200 has an accommodating groove 201, and the accommodating groove 201 is configured to mount the linear motion electromagnetic mechanism 100. Refer to FIG. 4. The relay 1000 further includes a cover body 500 mounted on the base 200. The cover body 500 can cover related components such as the linear motion electromagnetic mechanism 100, the moving contact assembly 300, and the fixed contact assembly 400, to protect these components.

Refer to FIG. 27. When the moving contact assembly 300 is disposed, each moving contact assembly 300 includes a support 310, two moving spring plates 320, and a plurality of moving contact points 330. One moving spring plate 320 is disposed on each of two opposite sides of the support 310, and one moving contact point 330 is disposed on each of two ends of each moving spring plate 320. The moving spring plate 320 is made of an elastic material and has a specific elastic deformation capability. When the moving contact point 330 of the moving spring plate 320 is in contact with the fixed contact assembly 400, the moving spring plate 320 is elastically deformed, which reduces bounces and improves operation reliability. The two moving spring plates 320 in the moving contact assembly 300 are designed separately, with gas insulation between the two moving spring plates 320 to implement a reliable electrical gap.

When the support 310 and the moving spring plate 320 are assembled, the support 310 has a positioning rod 311, the moving spring plate 320 has a shape hole 321. Cross sections of the positioning rod 311 and the shape hole 321 are adapted to each other. When the positioning rod 311 penetrates through the shape hole 321, a circumferential position of the moving spring plate 320 is limited, so that the moving contact point 330 on the moving spring plate 320 is kept at a predetermined position. For example, the shape hole 321 is a waist-shaped hole, and the positioning rod 311 is set to be in a shape that is adapted to the waist-shaped hole. In addition, the shape hole 321 and the positioning rod 311 may be alternatively set to be in other shapes that are adapted to each other.

In some embodiments, to implement low bounce effect of the moving contact assembly 300, each moving contact assembly 300 further includes two elastic sheets 340. One elastic sheet 340 is disposed on each of the two opposite sides of the support 310. The two moving spring plates 320 are disposed in a one-to-one correspondence on sides that are of the two elastic sheets 340 and that face away from the support 310. The elastic sheet 340 is disposed between each moving spring plate 320 and the support 310, so that the two moving spring plates 320 are spaced apart at a specific distance, the elastic deformation capability of the moving spring plate 320 is also improved, and bounces of the moving spring plate 320 are further reduced. The elastic sheet 340 may be set as a bent structure. One end of the elastic sheet 340 abuts against the support 310, and the other end of the elastic sheet 340 abuts against the moving spring plate 320.

When the support 310 and the elastic sheet 340 are assembled, similar to an assembly relationship between the support 310 and the moving spring plate 320, positioning and assembly of the elastic sheet 340 are implemented by using the positioning rod 311 of the support 310 and a shape hole 341 of the elastic sheet 340.

In addition, refer to FIG. 15. A gasket 350 may be disposed on one side that is of each moving spring plate 320 and that faces away from the elastic sheet 340, so that the integrated moving contact assembly 300 is inserted into the first mounting groove 1413a of the first vehicle body 141b (or the second mounting groove 1415a of the second vehicle body 141c) in the movable rack 141. Connection is reliable, and assembly is convenient. Similarly, a positioning hole of the support 310 cooperates with a shape hole 351 of the gasket 350, to assemble the gasket 350 on the moving spring plate 320.

Refer to FIG. 28 and FIG. 29. When the fixed contact assembly 400 is disposed, each fixed contact assembly 400 includes four fixed contact plates 410, four fixed contact points 420, and two arc-extinguishing permanent magnets 430. The fixed contact plates 410 are spaced apart in pairs. Refer to FIG. 3. Each pair of the fixed contact plates 410 and one moving spring plate 320 are disposed correspondingly. Two moving spring plates 320 in a same moving contact assembly 300 are located between two pairs of fixed contact plates 410. The fixed contact point 420 is disposed on each fixed contact plate 410. The fixed contact point 420 and the moving contact point 330 cooperate in a one-to-one correspondence. In an arrangement direction of the two moving spring plates 320 (that is, the first direction X), one arc-extinguishing permanent magnet 430 is disposed between every two adjacent fixed contact plates 410.

The fixed contact assembly 400 and the moving contact assembly 300 are disposed correspondingly, and each moving spring plate 320 of the moving contact assembly 300 corresponds to two fixed contact plates 410 of the fixed contact assembly 400. When two moving contact points 330 on the moving spring plate 320 and fixed contact points 420 on the two fixed contact plates 410 are in contact in a one-to-one correspondence, a circuit is connected. When the two moving contact points 330 and the corresponding fixed contact points 420 are separated, the circuit is disconnected. The fixed contact plate 410 may be made of a rigid material that is not prone to deformation. The fixed contact point 420 may be riveted to the fixed contact plate 410. The arc-extinguishing permanent magnet 430 is configured to quickly extinguish an arc when the fixed contact assembly 400 and the moving contact assembly 300 are separated.

Two adjacent fixed contact plates 410 located at one end of the moving spring plate 320 may be of an integrally formed structure, and are configured to connect to a power consuming device. The integrally formed fixed contact plate 410 is easy to form. Two adjacent fixed contact plates 410 located at the other end of the moving spring plate 320 are respectively connected to the main power supply and the backup power supply.

In addition, a plurality of pins 440 are further disposed on the base 200 for easy connection to the power supply and the power consuming device. The pin 440 may be made of a rigid material that is not prone to deformation. A plurality of pins 440 are disposed at each of two opposite ends of the base 200, so that a structure of the relay is compact and wiring is convenient. The pin 440 and the fixed contact plate 410 may be connected through a wire 450. For example, a total of 16 pins 440 are configured in the base 200, including 12 power pins, two auxiliary contact point pins, and two coil pins.

When the fixed contact plate 410, the arc-extinguishing permanent magnet 430, and the pin 440 are assembled on the base 200, corresponding notches may be provided on the base 200 to implement plug-in assembly of different structures.

Refer to FIG. 26 and FIG. 28. In some embodiments, a plurality of first plastic gate plates 210 may be disposed on the base 200. A plurality of first plastic gate plates 210 are spaced apart between every two adjacent fixed contact plates 410, to quickly extinguish the arc when the fixed contact assembly 400 and the moving contact assembly 300 are separated. Refer to FIG. 30. A plurality of second plastic gate plates 510 may be disposed on a bottom surface of the cover body 500. A plurality of second plastic gate plates 510 are spaced apart between every two adjacent fixed contact plates 410, to quickly extinguish the arc when the fixed contact assembly 400 and the moving contact assembly 300 are separated.

Refer to FIG. 4 and FIG. 5. In some embodiments, the relay 1000 further includes a guiding part 220 mounted on the base 200, and the guiding part 220 is configured to guide the movable rack 141 to move in a predetermined direction.

For example, the guiding part 220 may be set as a guiding cover, and the guiding cover may be snapped on an upper side of the first vehicle body 141b (the second vehicle body 141c) of the movable rack 141. The guiding cover includes a transverse arm 221 and two vertical arms 222, and the two vertical arms 222 are respectively connected to two ends of the transverse arm 221. Refer to FIG. 8. Limiting grooves 141d are provided on the upper sides of the first vehicle body 141b and the second vehicle body 141c. The first vehicle body 141b (the second vehicle body 141c) is slidably mounted on the base 200. The transverse arm 221 of the guide cover is snapped on the limiting groove 141d, the two vertical arms 222 are disposed corresponding to two opposite side walls of the vehicle body, and the two vertical arms 222 are connected to the base 200, so that a moving direction and a moving range of the vehicle body are limited.

Refer to FIG. 31. An embodiment of this application provides a power distribution box 2000, including a circuit board 2001 and the foregoing relay 1000. The relay 1000 is electrically connected to the circuit board 2001.

The power distribution box 2000 may be connected to two power supplies and a power consuming device. A plurality of moving contact assemblies 300 and fixed contact assemblies 400 on the relay 1000 are in contact or separated, so that switching between the two power supplies can be implemented, to supply power to the power consuming device.

For example, a main power supply connected to the relay 1000 may be alternating currents (alternating currents, ACs), and a backup power supply connected to the relay 1000 may be a photovoltaic power supply or a high-voltage-direct-current (high voltage direct current, HVDC) high-power power supply. The relay 1000 can be used to switch on and switch off a plurality of power supplies, implement quick switching of electric energy, and reduce power interruption time in a switching process. The power distribution box 2000 may be used for switching between single-phase dual power supplies, or may be used for switching between three-phase four-wire dual power supplies shown in FIG. 32, or may be used for high-power switching between other multi-wire dual power supplies.

Refer to FIG. 31. In some embodiments, the power distribution box 2000 further includes a box body 2002, and the circuit board 2001 is mounted in the box body 2002. The circuit board 2001 may include a drive board and a power board. A connector is disposed on the circuit board 2001. The connector may include two input power connectors 2003 and one output power connector 2004. The two input power connectors 2003 are respectively configured to connect the main power supply and the backup power supply. The output power connector 2004 is configured to connect to the power consuming device.

Refer to FIG. 33. An embodiment of this application provides a communication device, including a power consuming device 3000 and the foregoing power distribution box 2000. The power consuming device 3000 is electrically connected to the power distribution box 2000. The power consuming device 3000 may be a power consuming device 3000 such as an internet data center, a public cloud server, or a switch. A scenario in which a backup power supply 4002 is quickly switched when a main power supply 4001 experiences a power failure is implemented, to reduce power failure time of a system, reduce data losses, and avoid a service loss.

For example, one side of the relay 1000 in the power distribution box 2000 is connected to the main power supply 4001 and the backup power supply 4002, and the other side of the relay 1000 is connected to the power consuming device 3000. Automatic control is implemented by using a detection and control system 2100. When it is detected that the main power supply 4001 experiences the power failure, switching to the backup power supply 4002 is quickly performed to supply power. The power consuming device 3000 may further be configured with a backup battery 4003. When it is detected that the main power supply 4001 experiences the power failure, a circuit between the backup battery 4003 and the power consuming device 3000 is connected, and the backup battery 4003 and the backup power supply 4002 supply power at the same time, which improves operation reliability of the device. The backup battery 4003 may be a lead-acid battery, a lithium battery, or the like.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A linear motion electromagnetic mechanism, comprising: a magnetic yoke, a first bipolar charging permanent magnet, a second bipolar charging permanent magnet, and a drive assembly, wherein
the magnetic yoke has a frame-shaped portion;
the first bipolar charging permanent magnet and the second bipolar charging permanent magnet are respectively attached to two opposite inner walls of the frame-shaped portion, the first bipolar charging permanent magnet has a first magnet portion and a second magnet portion that are connected and have opposite magnetic conduction directions, the second bipolar charging permanent magnet has a third magnet portion and a fourth magnet portion that are connected and have opposite magnetic conduction directions, the first magnet portion and the third magnet portion are spaced apart and have a same magnetic conduction direction, and the second magnet portion and the fourth magnet portion are spaced apart and have a same magnetic conduction direction;
the drive assembly comprises a movable rack, a coil, a first moving iron core, and a second moving iron core, and the movable rack is capable of moving back and forth in a direction perpendicular to an interface between the first magnet portion and the second magnet portion, to drive a moving contact assembly to move;
the coil is disposed on the movable rack, the coil comprises a first semi-ring portion and a second semi-ring portion that are connected, the first semi-ring portion is located between the first magnet portion and the third magnet portion, and the second semi-ring portion is located between the second magnet portion and the fourth magnet portion; and
both the first moving iron core and the second moving iron core are disposed on the movable rack, the first moving iron core is located on a side that is of the first semi-ring portion and that faces away from the second semi-ring portion, and the second moving iron core is located on a side that is of the second semi-ring portion and that faces away from the first semi-ring portion.

2. The linear motion electromagnetic mechanism according to claim 1, wherein both the first moving iron core and the second moving iron core are located inside the frame-shaped portion, the first moving iron core is located between the first magnet portion and the third magnet portion, and the second moving iron core is located between the second magnet portion and the fourth magnet portion; or
both the first moving iron core and the second moving iron core are located outside the frame-shaped portion, the first moving iron core is located outside a same end part of the first magnet portion and the third magnet portion, the second moving iron core is located outside a same end part of the second magnet portion and the fourth magnet portion, a first holding permanent magnet is disposed on the first moving iron core, a second holding permanent magnet is disposed on the second moving iron core, and magnetic conduction directions of the first holding permanent magnet and the second holding permanent magnet are opposite.

3. The linear motion electromagnetic mechanism according to claim 1 or 2, wherein the drive assembly further comprises a third moving iron core, the third moving iron core is disposed on the movable rack, the third moving iron core is located inside the coil, and two opposite sides of the third moving iron core respectively face the first bipolar charging permanent magnet and the second bipolar charging permanent magnet.

4. The linear motion electromagnetic mechanism according to any one of claims 1 to 3, wherein the frame-shaped portion comprises a first segment, a second segment, a third segment, and a fourth segment that are sequentially connected, the first bipolar charging permanent magnet is attached to an inner wall of the fourth segment, the second bipolar charging permanent magnet is attached to an inner wall of the second segment, the first segment is disposed opposite to the first moving iron core, and the third segment is disposed opposite to the second moving iron core; and
the first segment has a first opening at a position corresponding to the first moving iron core, and the third segment has a second opening at a position corresponding to the second moving iron core.

5. The linear motion electromagnetic mechanism according to claim 4, wherein when the drive assembly comprises the third moving iron core located inside the coil, the second segment has a third opening at a position corresponding to an interface between the third magnet portion and the fourth magnet portion, and the fourth segment has a fourth opening at a position corresponding to the interface between the first magnet portion and the second magnet portion.

6. The linear motion electromagnetic mechanism according to any one of claims 1 to 5, wherein the movable rack comprises a coil rack, a first vehicle body, and a second vehicle body, the first vehicle body and the second vehicle body are respectively fastened to two opposite ends of the coil rack, the coil is disposed on the coil rack, the first vehicle body is configured to mount the first moving iron core and a part of moving contact assemblies, and the second vehicle body is configured to mount the second moving iron core and a part of moving contact assemblies.

7. The linear motion electromagnetic mechanism according to claim 6, wherein the first vehicle body comprises a first mounting arm and a first frame portion connected to the first mounting arm, the first mounting arm has a first mounting groove configured to mount a moving contact, the first frame portion is fastened to the coil rack, and the first moving iron core is fastened to the first frame portion; and
the second vehicle body comprises a second mounting arm and a second frame portion connected to the second mounting arm, the second mounting arm has a second mounting groove configured to mount a moving contact, the second frame portion is fastened to the coil rack, and the second moving iron core is fastened to the second frame portion.

8. The linear motion electromagnetic mechanism according to any one of claims 1 to 7, wherein the magnetic yoke comprises a U-shaped yoke iron and a top cover, two ends of the top cover are respectively fastened to two ends of the U-shaped yoke iron, the first bipolar charging permanent magnet is attached to an inner wall of the top cover, and the second bipolar charging permanent magnet is attached to an inner wall of the U-shaped yoke iron.

9. The linear motion electromagnetic mechanism according to claim 8, wherein the U-shaped yoke iron and the top cover are positioned and assembled by using a first boss and a first notch that are adapted to each other; and/or
the first bipolar charging permanent magnet and the top cover are positioned and assembled by using a second boss and a second notch that are adapted to each other; and/or
the second bipolar charging permanent magnet and the U-shaped yoke iron are positioned and assembled by using a third boss and a third notch that are adapted to each other.

10. The linear motion electromagnetic mechanism according to any one of claims 1 to 9, wherein a plurality of groups of first bipolar charging permanent magnets and second bipolar charging permanent magnets are disposed, there are a plurality of coils, the plurality of coils are connected in series, and the plurality of coils are distributed between the plurality of groups of first bipolar charging permanent magnets and second bipolar charging permanent magnets in a one-to-one correspondence.

11. A relay, comprising a base, one or more moving contact assemblies, one or more fixed contact assemblies, and the linear motion electromagnetic mechanism according to any one of claims 1 to 10, wherein the one or more fixed contact assemblies are disposed on the base, the one or more moving contact assemblies are disposed on the movable rack, and the one or more moving contact assemblies and the one or more fixed contact assemblies are disposed in a one-to-one correspondence.

12. The relay according to claim 11, wherein each moving contact assembly comprises a support, two moving spring plates, and a plurality of moving contact points, one moving spring plate is disposed on each of two opposite sides of the support, and one moving contact point is disposed on each of two ends of each moving spring plate.

13. The relay according to claim 12, wherein each moving contact assembly further comprises two elastic sheets, one elastic sheet is disposed on each of the two opposite sides of the support, and the two moving spring plates are disposed in a one-to-one correspondence on sides that are of the two elastic sheets and that face away from the support.

14. The relay according to claim 12 or 13, wherein each fixed contact assembly comprises four fixed contact plates, four fixed contact points, and two arc-extinguishing permanent magnets;
the fixed contact plates are spaced apart in pairs, each pair of the fixed contact plates and one moving spring plate are disposed correspondingly, and two moving spring plates in a same moving contact assembly are located between two pairs of fixed contact plates;
the fixed contact point is disposed on each fixed contact plate, and the fixed contact point and the moving contact point cooperate in a one-to-one correspondence; and
in an arrangement direction of the two moving spring plates, one arc-extinguishing permanent magnet is disposed between every two adjacent fixed contact plates.

15. A power distribution box, comprising a circuit board and the relay according to any one of claims 11 to 14, wherein the relay is electrically connected to the circuit board.

16. A communication device, comprising a power consuming device and the power distribution box according to claim 15, wherein the power consuming device is electrically connected to the power distribution box.
